(19) Europäisches Patentamt
European Patent Office
Office européen des brevets

(11) **EP 3 720 135 B1**

(12) **EUROPEAN PATENT SPECIFICATION**

(45) Date of publication and mention
of the grant of the patent:
**17.08.2022  Bulletin 2022/33**

(21) Application number: **20171784.0**

(22) Date of filing: **07.12.2016**

(51) International Patent Classification (IPC):
*H04N 21/236* $^{(2011.01)}$    *H04N 21/488* $^{(2011.01)}$
*G10L 19/00* $^{(2013.01)}$    *H04H 20/28* $^{(2008.01)}$
*H04H 20/95* $^{(2008.01)}$    *H04H 60/07* $^{(2008.01)}$
*H04N 21/431* $^{(2011.01)}$    *H04N 21/439* $^{(2011.01)}$

(52) Cooperative Patent Classification (CPC):
**H04N 21/4884; H04H 20/95; H04H 60/07;
H04N 21/23614; H04N 21/4316; H04N 21/4394;**
G10L 19/167

(54) **RECEIVING DEVICE AND RECEIVING METHOD FOR ASSOCIATING SUBTITLE DATA WITH CORRESPONDING AUDIO DATA**

EMPFANGSVORRICHTUNG UND EMPFANGSVERFAHREN  ZUM ZUORDNEN VON UNTERTITELDATEN ZU ENTSPRECHENDEN AUDIODATEN

DISPOSITIF ET PROCÉDÉ DE RÉCEPTION POUR ASSOCIER DES DONNÉES DE SOUS-TITRES AUX DONNÉES AUDIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.12.2015   JP 2015247266**

(43) Date of publication of application:
**07.10.2020   Bulletin 2020/41**

(62) Document number(s) of the earlier application(s) in
accordance with Art. 76 EPC:
**16875499.2 / 3 393 130**

(73) Proprietor: **Sony Group Corporation
Tokyo 108-0075 (JP)**

(72) Inventor: **TSUKAGOSHI, Ikuo
Tokio 108-0075 (JP)**

(74) Representative: **2SPL Patentanwälte PartG mbB
Landaubogen 3
81373 München (DE)**

(56) References cited:
**WO-A1-2015/126117      US-A1- 2013 002 833**

- **YONGTAO HU ET AL: "Speaker-Following Video
  Subtitles", ACM TRANSACTIONS ON
  MULTIMEDIA COMPUTING COMMUNICATIONS
  ANDAPPLICATIONS, ASSOCIATION FOR
  COMPUTING MACHINERY, US, vol. 11, no. 2, 7
  January 2015 (2015-01-07), pages 1-17,
  XP058064903, ISSN: 1551-6857, DOI:
  10.1145/2632111**
- **SIMONE FÜG ET AL: "Metadata Updates to
  MPEG-H 3D audio", 112. MPEG MEETING;
  22-6-2015 - 26-6-2015; WARSAW; (MOTION
  PICTURE EXPERT GROUP OR ISO/IEC
  JTC1/SC29/WG11),, no. m36586, 17 June 2015
  (2015-06-17), XP030064954,**
- **MEHTA AND T ZIEGLER S: "Personalized and
  immersive broadcast audio", IBC 2014
  CONFERENCE, 11-15 SEPTEMBER 2014,
  AMSTERDAM,, 11 September 2014 (2014-09-11),
  XP030082501,**

# Description

[Technical Field]

The present technology relates to a transmission apparatus, a transmission method, a reception apparatus, and a reception method, and more particularly, to a transmission apparatus and so on for sending subtitle information together with video information.

[Background Art]

It has been common practice up to now in DVB (Digital Video Broadcasting)-based broadcasting and so on to send subtitle information using bitmap data. In recent years, proposals have been made to send subtitle information using text character codes, i.e., in a text-based form. In this case, font expansion is conducted to match the resolution of the receiving side.

Also, in the case where subtitle information is sent in a text-based form, a proposal has been made to carry timing information in text information. As this text information, for example, TTML (Timed Text Markup Language) has been advocated by W3C (World Wide Web Consortium) (refer to PTL 1).

Also, for example, PTL 2 describes, as three-dimensional (3D) acoustic technology, a 3D audio rendering technology that maps audio data of an object sound source onto a speaker existing at an arbitrary position on the basis of position information thereof.

In the case where 3D audio is delivered together with video, object information (position information) can be configured such that it is possible for a viewer to recognize that a voice produced by a speaker, one of video image objects, comes from the same direction as the speaker irrespective of a speaker position.

[Citation List]

[Patent Literature]

[PTL 1]
JP 2012-169885A
[PTL 2]
JP-T-2014-520491

In document US 2017/180767 A1 an apparatus and a method are shown for transceiving a broadcast signal including a subtitling service. Accordingly, a method for transmitting a broadcast signal is shown, comprising encoding video data to generate a video stream, generating a broadcast signal including the generated video stream and a subtitle stream, and transmitting the generated broadcast signal. Accordingly, a transmission stream which provides a digital broadcast subtitling service using an XML subtitle can be transmitted.

In document "speaker-following video subtitles" by Yongtao Hu et al., ACM Transactions on multimedia computing communications and applications, association for computing machinery, US, vol. 11, no. 2, 7 January 2015, a method for improving the presentation of subtitles in video is proposed. An identification algorithms to detect the speakers based on audio and visual information is proposed. The placement of the subtitles is determined using global optimization.

In document US 2013 002833 (A1) systems and methods are presented for processing three-dimensional (3D) programming. The programming includes closed caption (CC) information that includes caption data and a location identifier that specifies a location for the caption data within the 3D programming. The programming information is processed to render the caption data at the specified location and to present the programming on the display. By encoding location identification information into the three-dimensional programming, a high level of configurability can be provided and the 3D experience can be preserved while captions are displayed.

In document "metadata updates to MPEG-H 3D audio", by Simone Füg et al., 112. MPEG meeting, 22-6-2015 to 26-6-2015, Warsaw, a range of metadata extensions is proposed for MPEG-H 3D audio. It is proposed to enable to convey metadata for rendering objects that are relevant in upcoming content formats.

In document "personalized and immersive broadcast audio" by S. Mehta et al., IBC 2014 conference, 11-15 September 2014, Amsterdam, 11 September 20014, the use of Dolby AC-4 format is proposed.

[Summary]

[Technical Problem]

It is an object of the present technology to effectively display subtitles on a receiving side.

[Solution to Problem]

The object is addressed by apparatuses and methods in accordance with the appended claims.

A concept of the present technology lies in a transmission apparatus that includes a video encoding section, a subtitle encoding section, an audio encoding section, a transmission section, and an information insertion section. The video encoding section generates a video stream having video coded data. The subtitle encoding section generates a subtitle stream having subtitle data corresponding to a speech of a speaker. The audio encoding section generates an audio stream having object coded data including audio data whose sound source is a speech of the speaker and position information regarding the sound source. The transmission section sends a container stream in a given format including the video stream, the subtitle stream, and the audio stream. The information insertion section inserts, into a layer of a container stream, metainformation for associating subtitle data corresponding to each speech included in the subtitle stream and audio data corresponding to each speech included in the audio stream.

In the present technology, a video stream having video coded data is generated by the video encoding section. A subtitle stream having subtitle data corresponding to a speech of a speaker is generated by the subtitle encoding section. For example, subtitle data may be TTML data or data in a format derived from the TTML.

An audio stream is generated by the audio encoding section. The audio stream has object coded data including audio data whose sound source is a speech of a speaker and position information regarding the sound source. A container stream in a given format is sent by the transmission section. The container stream includes the video stream, the subtitle stream, and the audio stream.

Metainformation is inserted into a layer of a container stream. The metainformation associates subtitle data corresponding to each speech included in the subtitle stream and audio data corresponding to each speech included in the audio stream.

For example, identification information may be added to each piece of subtitle data corresponding to each speech, and identification information may be added to each piece of audio data corresponding to each speech. Metainformation may be table information that associates identification information added to the subtitle data corresponding to each speech and identification information added to the audio data corresponding to each speech. Then, in this case, tag information having identification information may be inserted into an audio frame including audio data corresponding to each speech.

Thus, in the present technology, metainformation for associating subtitle data corresponding to each speech included in the subtitle stream and audio data corresponding to each speech included in the audio stream is inserted into a layer of a container stream. For this reason, in the case where a subtitle display position is controlled on a receiving side using position information regarding a sound source included in object coded data such that the display position is located at a speaker's position of a video image, it is possible to readily use adequate position information by using this metainformation.

Also, another concept of the present technology lies in a reception apparatus that includes a reception section that receives a container stream in a given format including a video stream, a subtitle stream, and an audio stream. The video stream has video coded data. The subtitle stream has subtitle data corresponding to a speech of a speaker. The audio stream has object coded data including audio data whose sound source is a speech of a speaker and position information regarding the sound source. The reception apparatus further includes a control section that controls a video decoding process, a subtitle decoding process, a video superimposition

position process, an audio decoding process, and a superimposition position process. The video decoding process acquires video data through a decoding process of the video stream. The subtitle decoding process acquires bitmap data of a subtitle corresponding to the speaker's speech through a decoding process of the subtitle stream. The video superimposition process acquires video data for display through superimposition of the bitmap data of the subtitle on the video data. The audio decoding process acquires channel data corresponding to the speech through a decoding process of the audio stream. The superimposition position process finds display coordinates of a subtitle corresponding to each of the speeches on a monitor screen on the basis of position information regarding the sound source corresponding to each of the speeches and performs control such that the bitmap data of the subtitle corresponding to each of the speeches is superimposed on the video data at the position corresponding to the display coordinates found.

In the present technology, the reception section receives a container stream in a given format including a video stream, a subtitle stream, and an audio stream. Here, the video stream has video coded data. The subtitle stream has subtitle data corresponding to a speech of a speaker. The audio stream has object coded data including audio data whose sound source is a speech of a speaker and position information regarding the sound source.

Video data is acquired by a video decoding section through a decoding process of the video stream. Bitmap data of a subtitle corresponding to a speech of a speaker is acquired by a subtitle decoding section through a decoding process of the subtitle stream. Video data for display is acquired by a video superimposition section through superimposition of bitmap data of a subtitle on the video data.

Channel data corresponding to a speech is acquired by an audio decoding section through a decoding process of the audio stream. Display coordinates of a subtitle corresponding to each speech on a monitor screen are found by a control section on the basis of position information regarding a sound source corresponding to each of the speeches, and superimposition of bitmap data of the subtitle corresponding to each of the speeches is controlled by the control section such that the bitmap data is superimposed on the video data at the position corresponding to the display coordinates found.

Thus, the present technology finds a position on a monitor screen where a subtitle corresponding to each speech is superimposed on the basis of position information regarding a sound source corresponding to each of the speeches and performs control such that the bitmap data of the subtitle corresponding to each of the speeches is superimposed on the video data at the position corresponding to the display coordinates found. For this reason, it is possible to display a subtitle corresponding to a speech of a speaker at the speaker's position in a video image.

It should be noted, for example, that, in the present technology, metainformation is inserted, into a container stream, that associates subtitle data corresponding to each speech included in a subtitle stream and audio data corresponding to each speech included in an audio stream, and that the control section may recognize, on the basis of this metainformation, correspondence between subtitle data corresponding to each speech and audio data corresponding to each speech.

[Advantageous Effect of Invention]

According to the present technology, it is possible to effectively display subtitles on a receiving side. It should be noted that the effect described in the present specification is merely illustrative and is not limited, and that there may be additional effects.

[Brief Description of Drawings]

[Fig. 1]

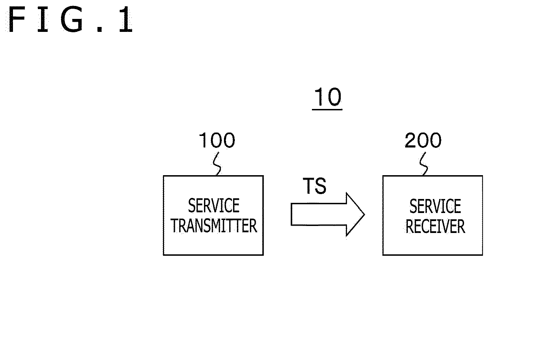

Fig. 1 is a block diagram illustrating a configuration example of a transmission/reception system as an embodiment.
[Fig. 2]

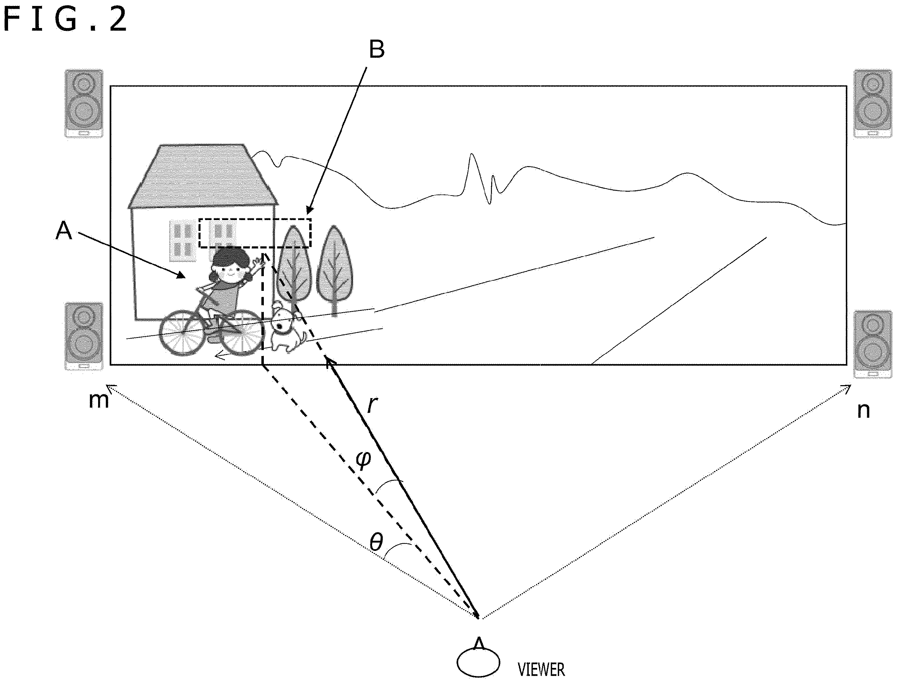

Fig. 2 is a diagram illustrating an example of a video image displayed on a monitor screen.
[Fig. 3]

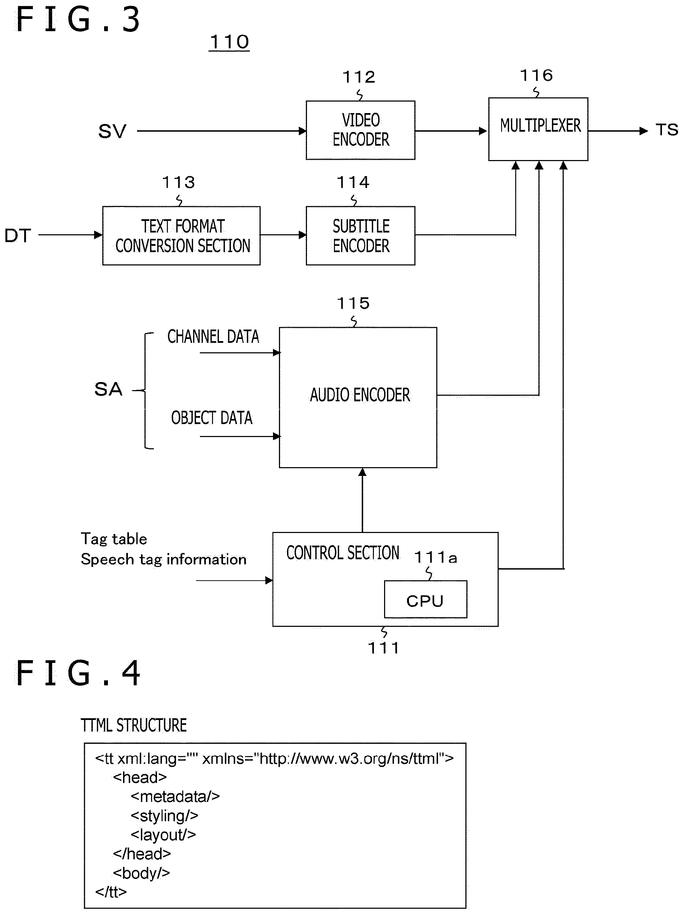

Fig. 3 is a block diagram illustrating a configuration example of a stream generation section included in a service transmitter.
[Fig. 4]
Fig. 4 is a diagram illustrating a TTML structure.
[Fig. 5]

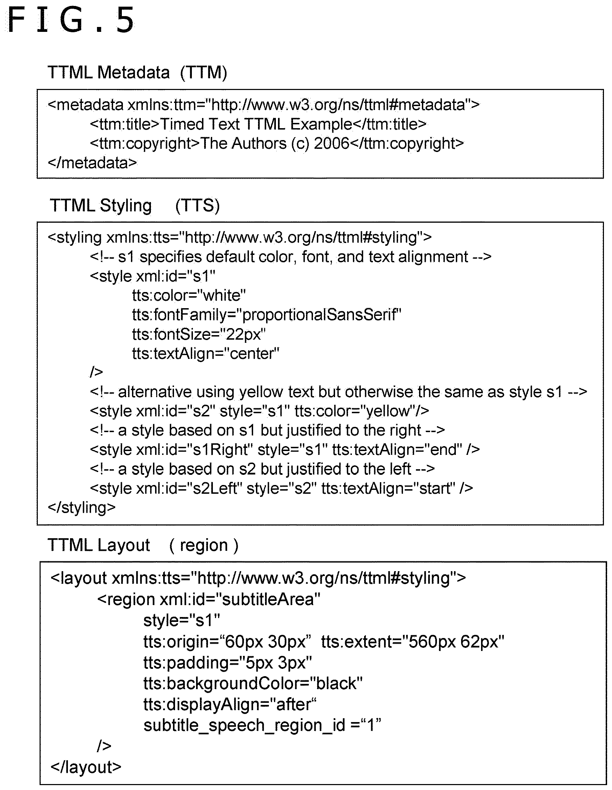

Fig. 5 is a diagram illustrating a structural example of metadata, styling, and layout, each of which is a component existing in a TTML structure head.
[Fig. 6]

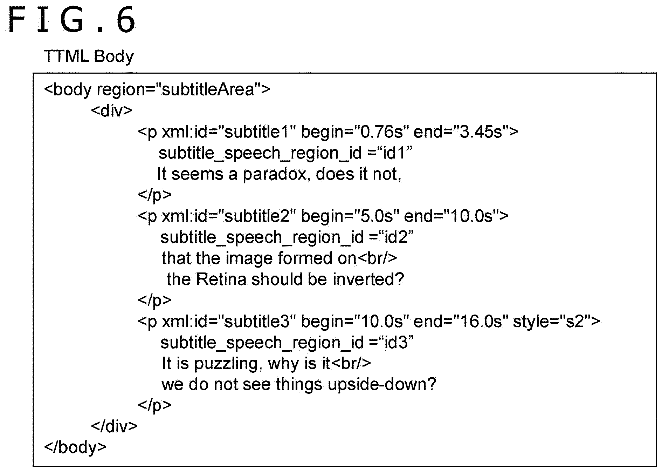

Fig. 6 is a diagram illustrating an example of a TTML structure body.
[Fig. 7]

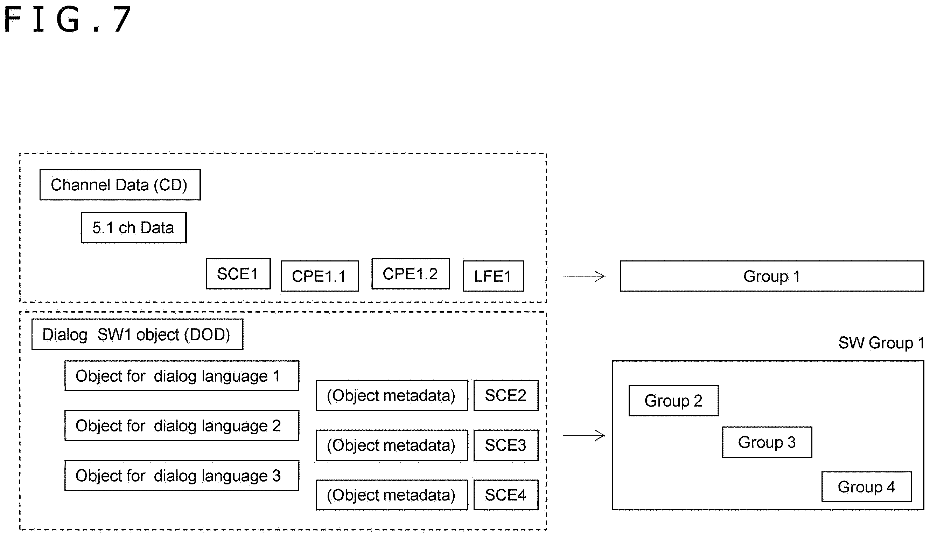

Fig. 7 is a diagram illustrating a configuration example of MPEG-H 3D Audio transport data.
[Fig. 8]

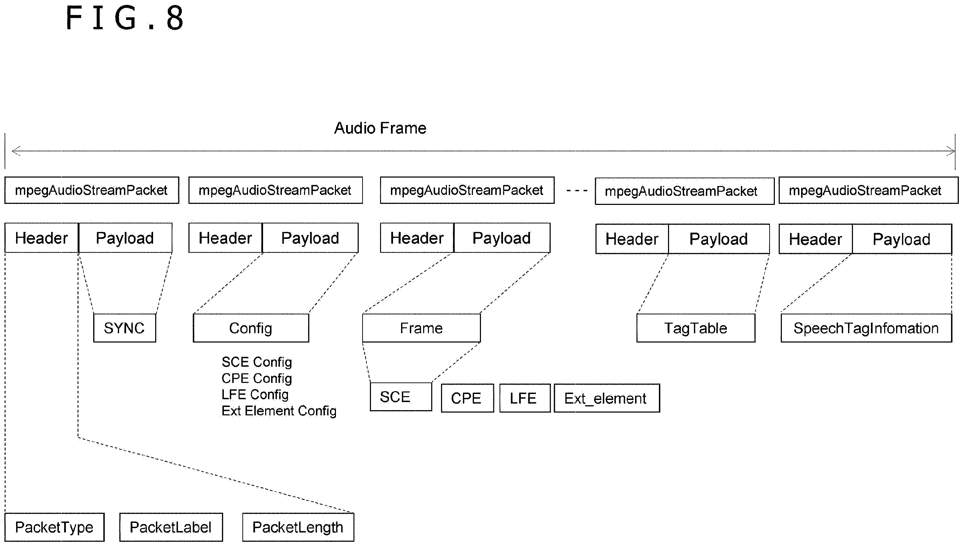

Fig. 8 is a diagram illustrating a structural example of an audio frame in MPEG-H 3D Audio transport data.
[Fig. 9]

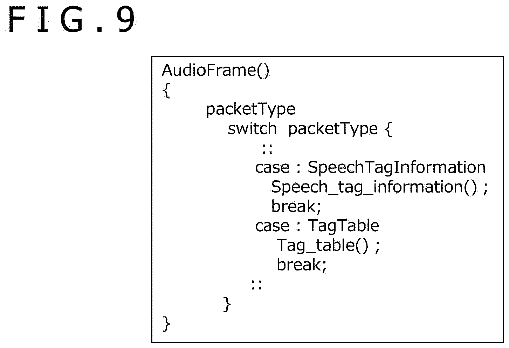

Fig. 9 is a diagram for describing a packet type that is defined anew.
[Fig. 10]

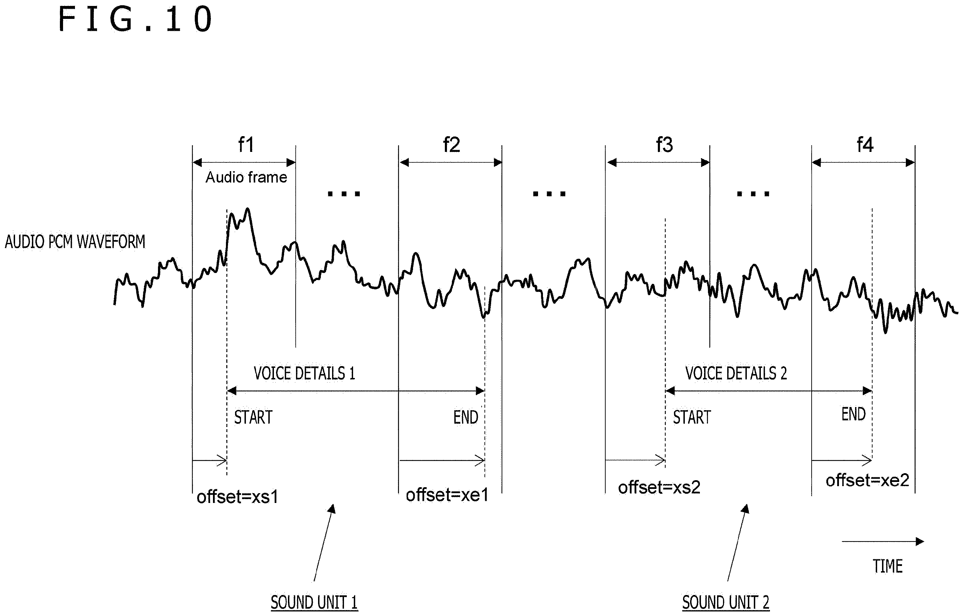

Fig. 10 is a diagram illustrating an example of correspondence between an audio stream having consecutive audio frames including audio compressed data and sound units.

[Fig. 11]

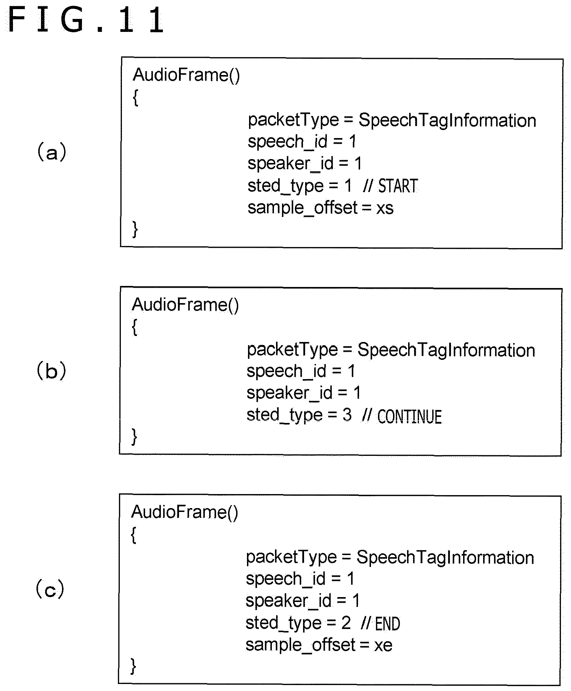

Fig. 11 is a set of diagrams illustrating, in a simplified manner, examples of details of tag information 'Speech_tag_information()' included in an audio frame.
[Fig. 12]

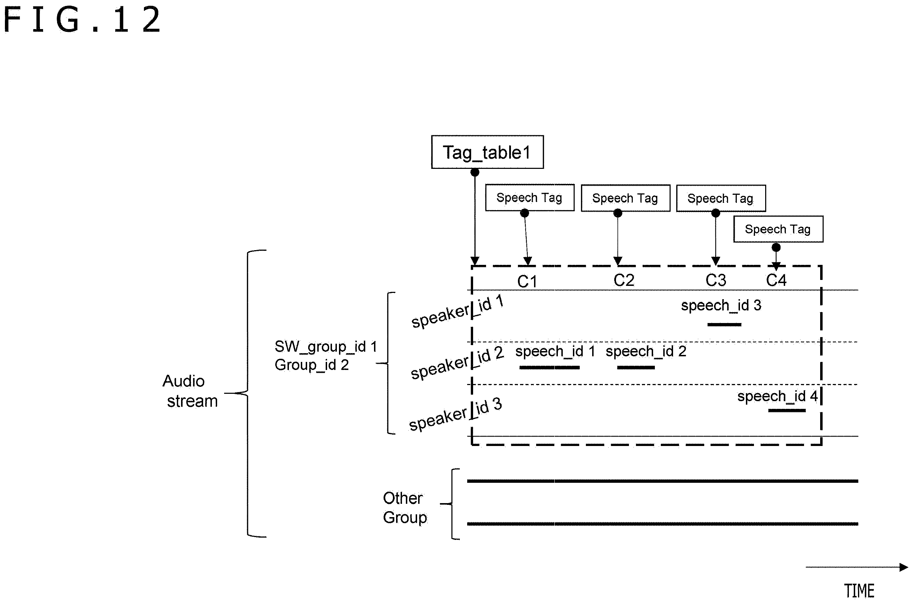

Fig. 12 is a diagram illustrating an example of insertion of tag information 'Speech_tag_information()' and table information 'Tag_table()' into an audio stream.
[Fig. 13]

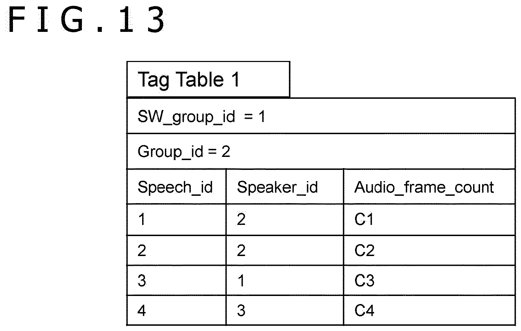

Fig. 13 is a diagram illustrating an example of details of table information 'Tag Table 1' inserted into the audio stream.
[Fig. 14]

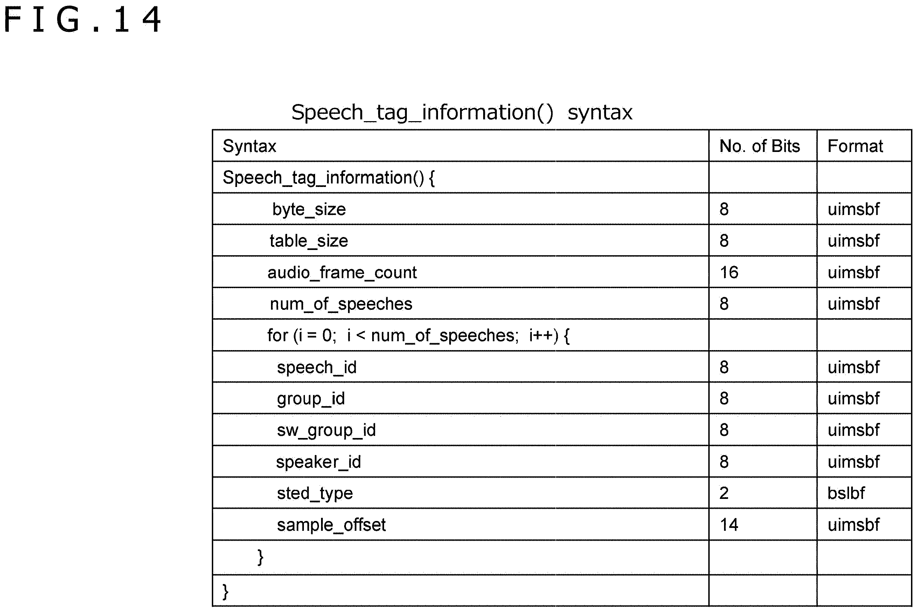

Fig. 14 is a diagram illustrating a structural example of tag information 'Speech_tag_information().'
[Fig. 15]

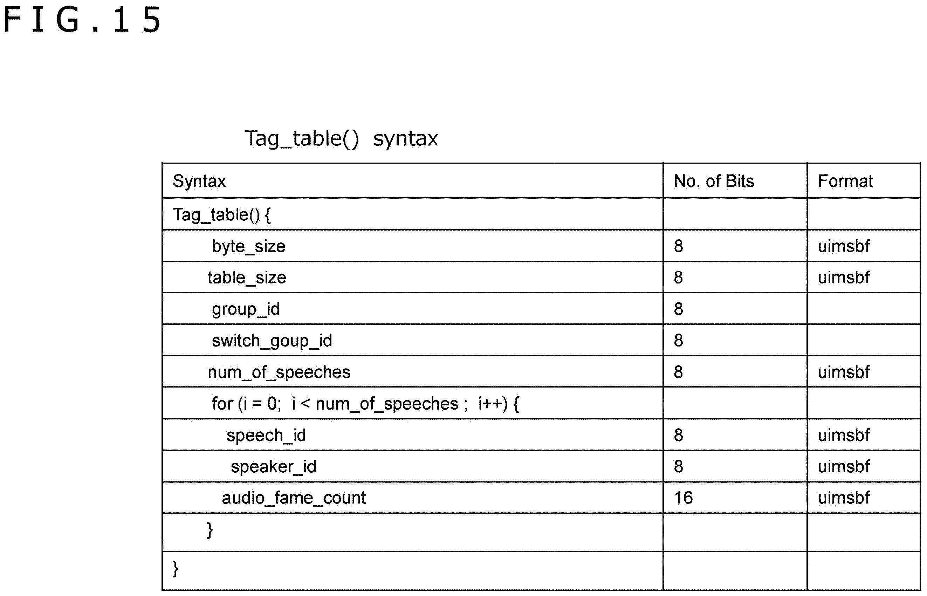

Fig. 15 is a diagram illustrating a structural example of table information 'Tag table().'
[Fig. 16]

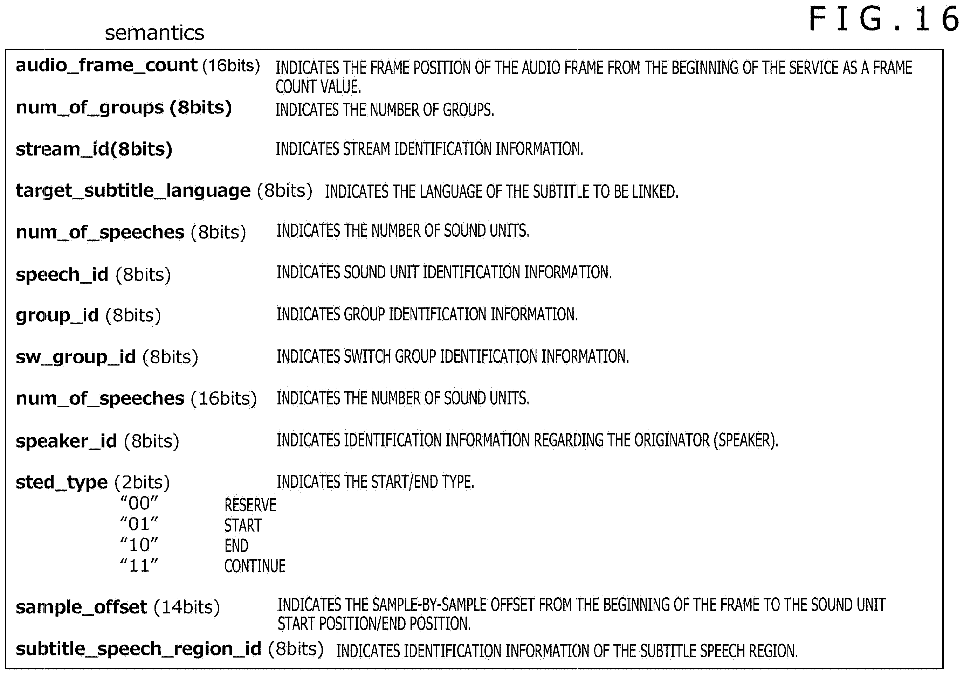

Fig. 16 is a diagram illustrating details of main pieces of information in the structural examples of tag information 'Speech_tag_information()' and table information 'Tag table().'
[Fig. 17]

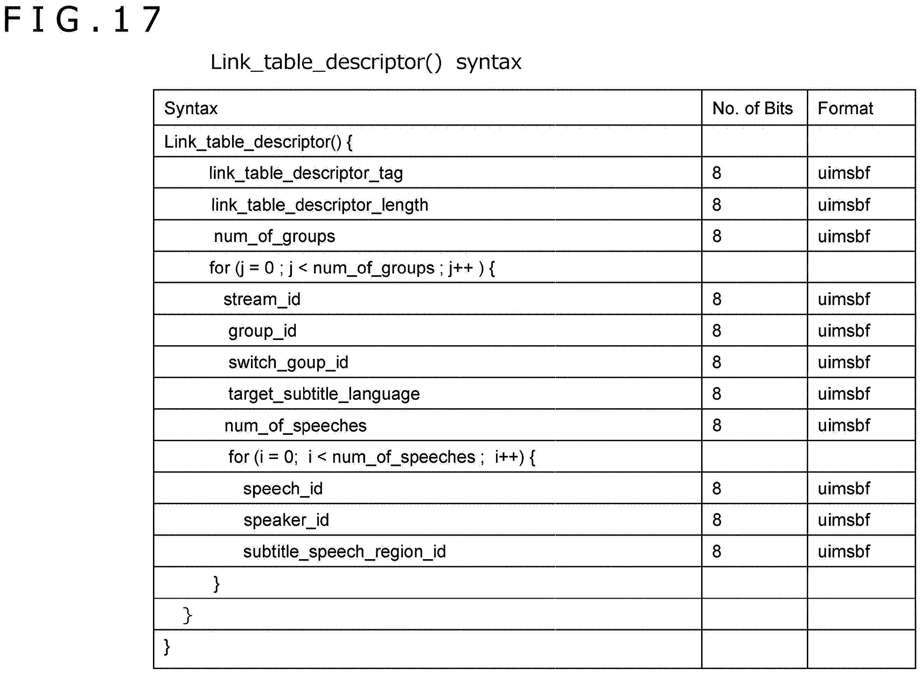

Fig. 17 is a diagram illustrating a structural example of a link table descriptor (Link_table_descriptor()).
[Fig. 18]

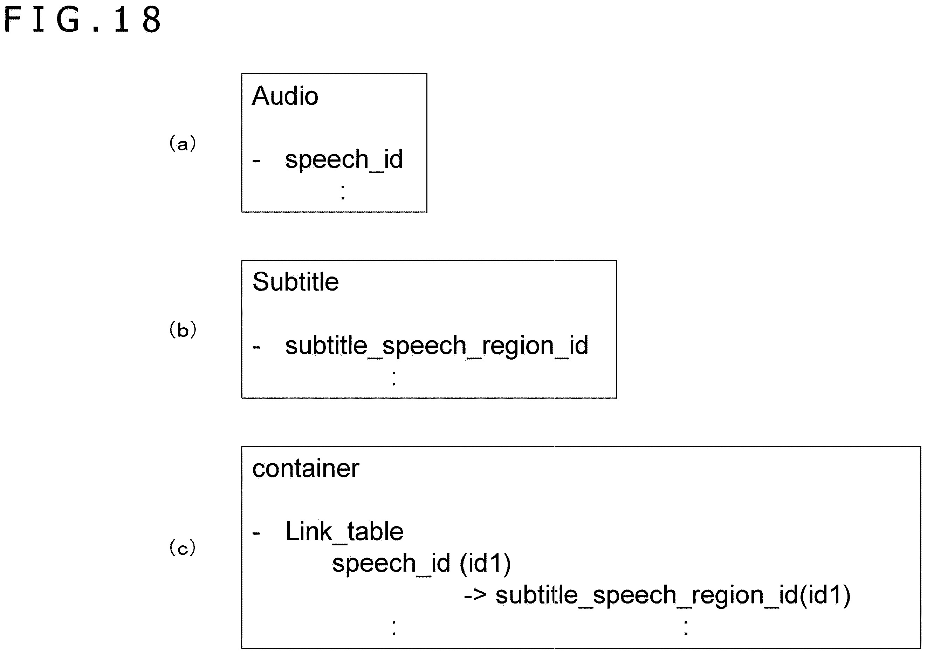

Fig. 18 is a set of diagrams illustrating association between 'speech_id' and 'subtitle_speech_region_id' established by the link table descriptor.
[Fig. 19]

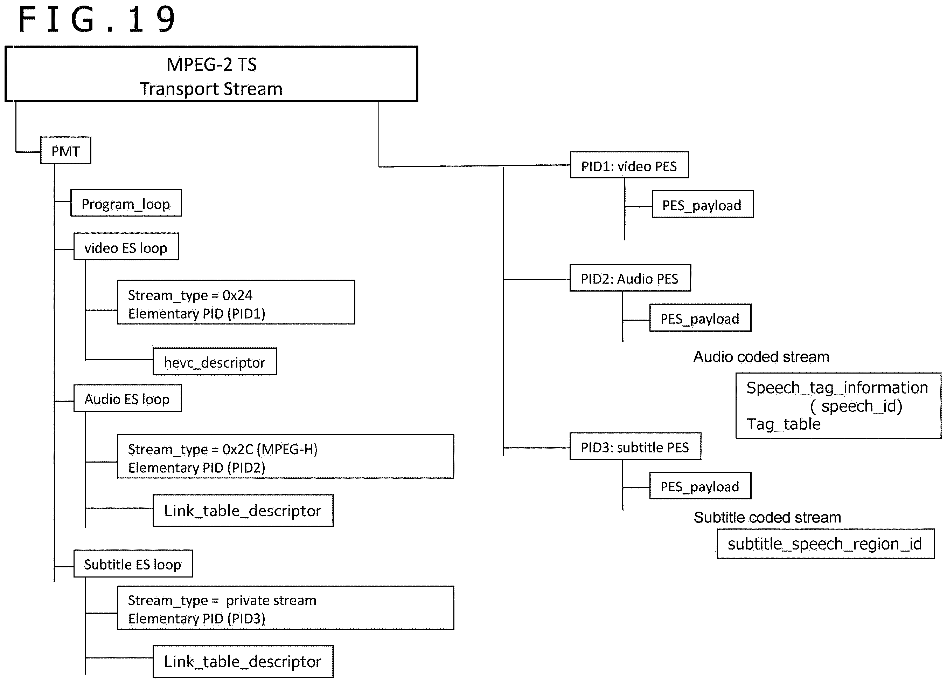

Fig. 19 is a diagram illustrating a configuration example of a transport stream TS.
[Fig. 20]

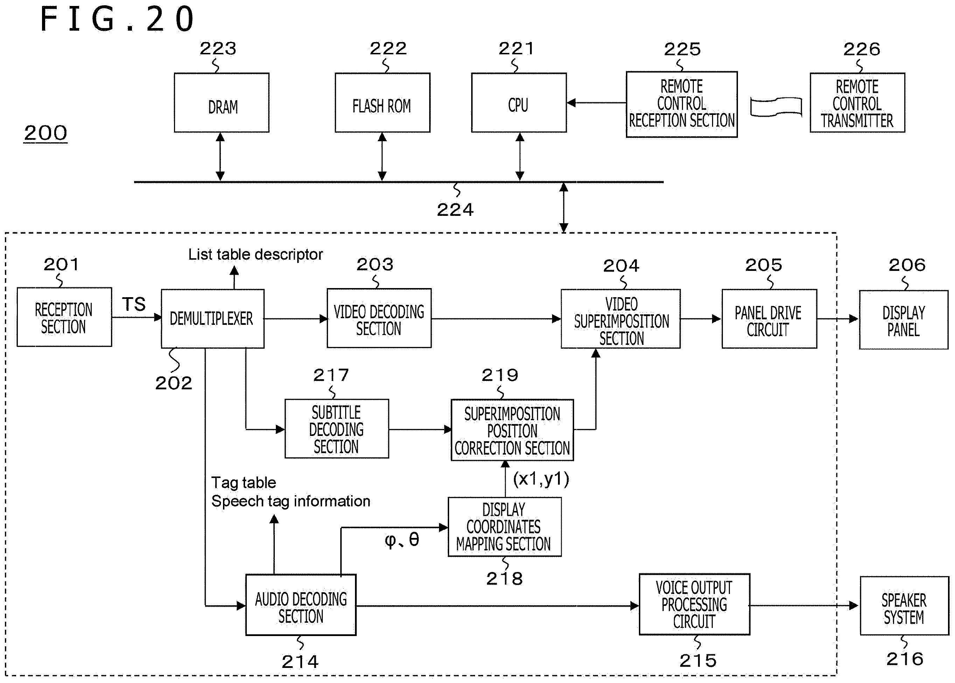

Fig. 20 is a block diagram illustrating a configuration example of a service receiver.
[Fig. 21]

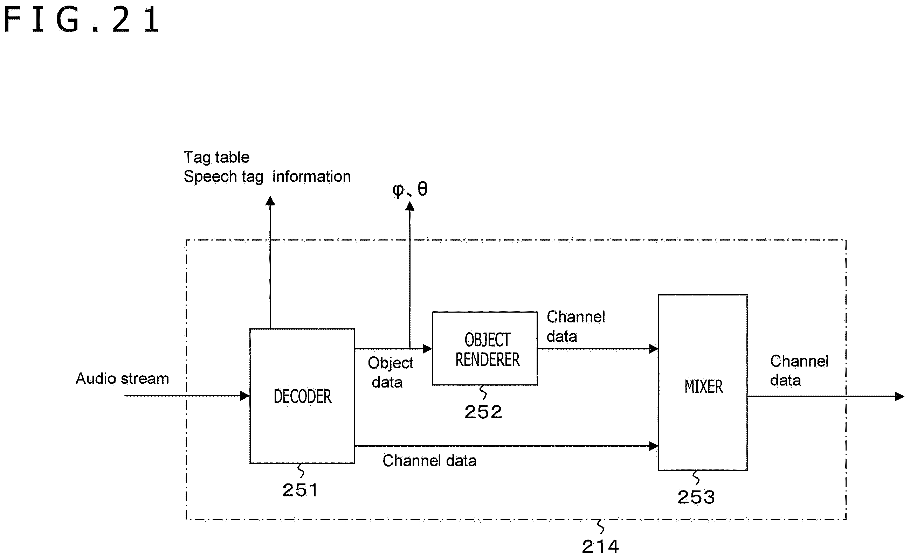

Fig. 21 is a block diagram illustrating a configuration example of an audio decoding section.
[Fig. 22]

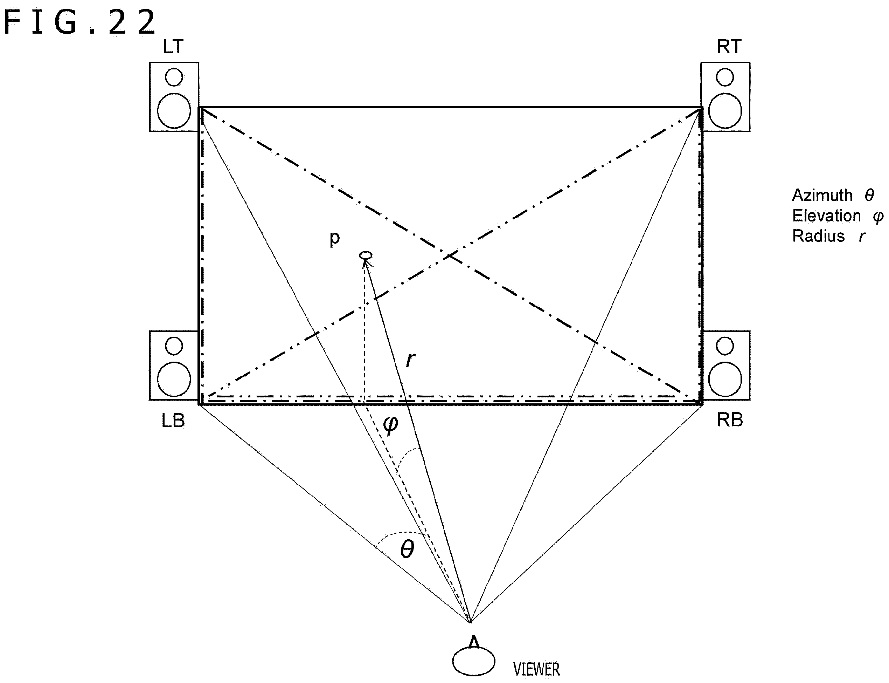

Fig. 22 is a diagram illustrating an overview of a rendering process in an object renderer.
[Fig. 23]

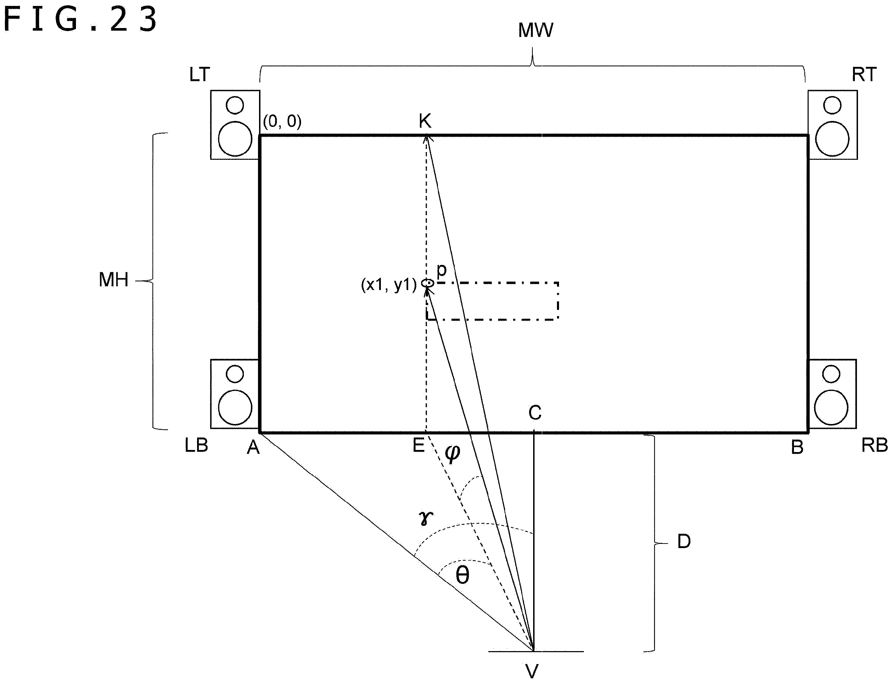

Fig. 23 is a diagram for describing a calculation example of display coordinates.
[Fig. 24]

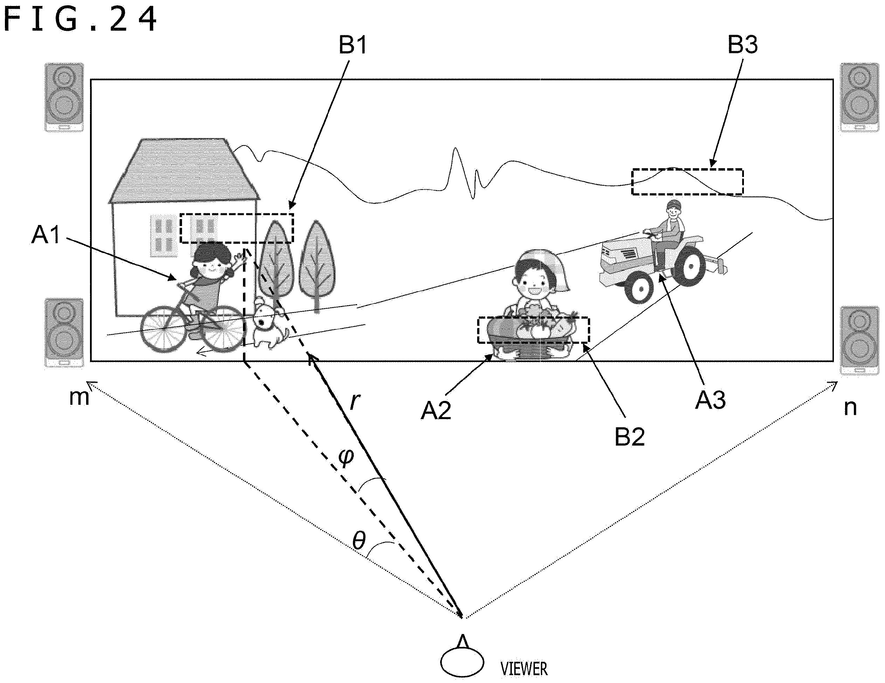

Fig. 24 is a diagram illustrating an example of multi-region display in which a plurality of speakers exist in a video image and in which subtitles, each corresponding to a speech of each of the speakers, are superimposed on the video image.
[Fig. 25]

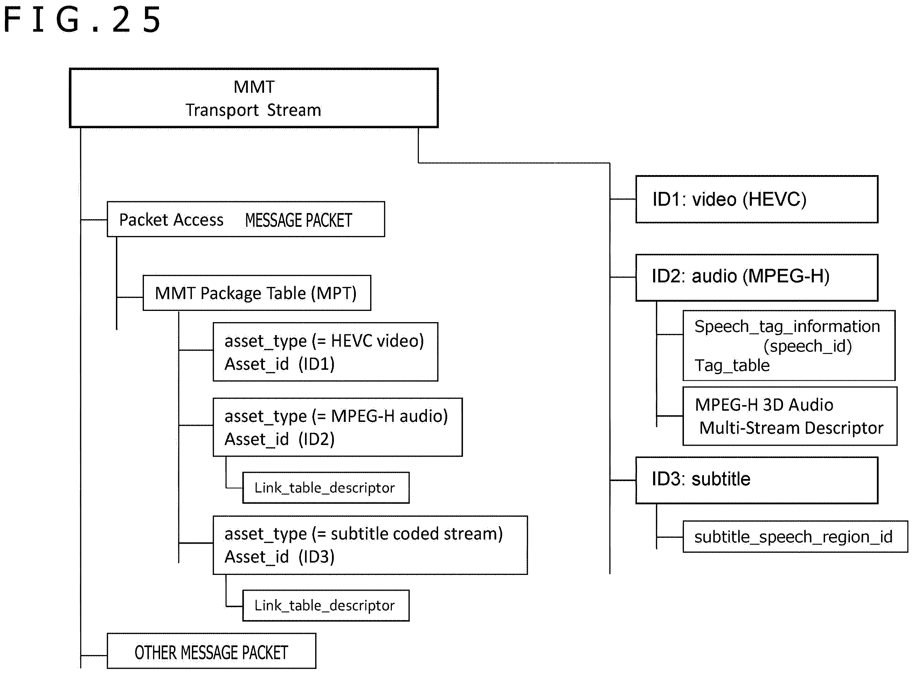

Fig. 25 is a diagram illustrating a configuration example of an MMT stream.

[Fig. 26]

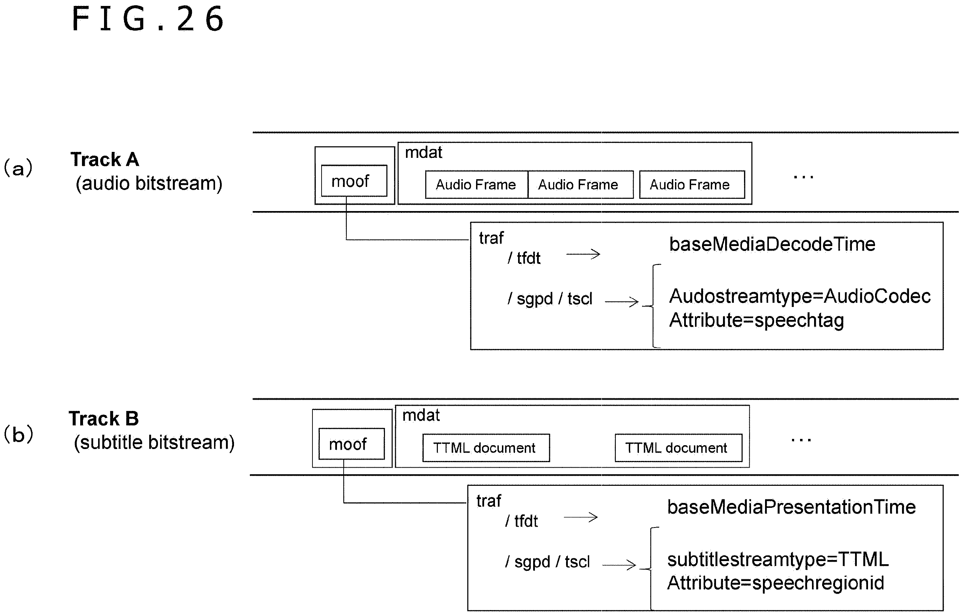

Fig. 26 is a pair of diagrams illustrating a configuration example of an MP4 stream (file) including an audio track data and a subtitle track data.

[Fig. 27]

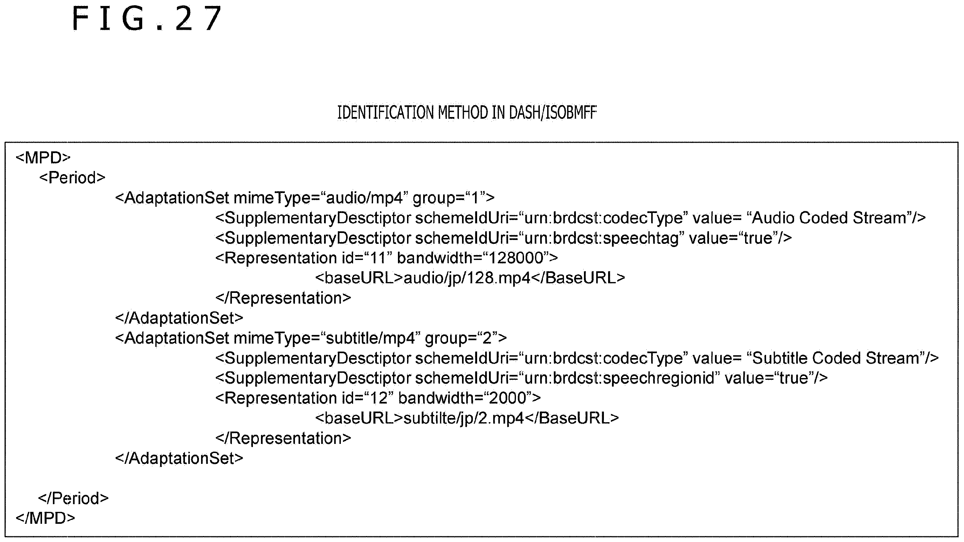

Fig. 27 is a diagram illustrating an example of describing an MPD file.

[Fig. 28]

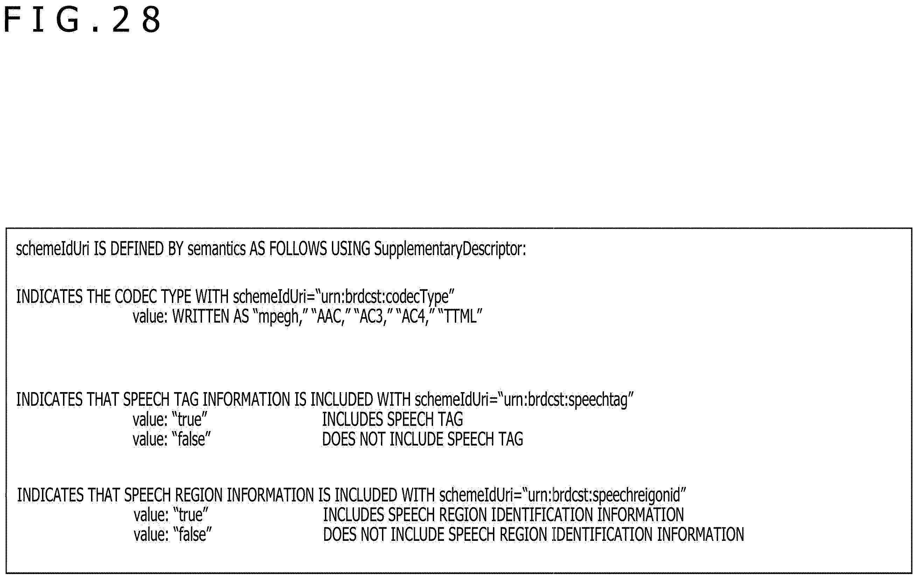

Fig. 28 is a diagram illustrating details of main pieces of information in the example of describing an MPD file.

[Fig. 29]

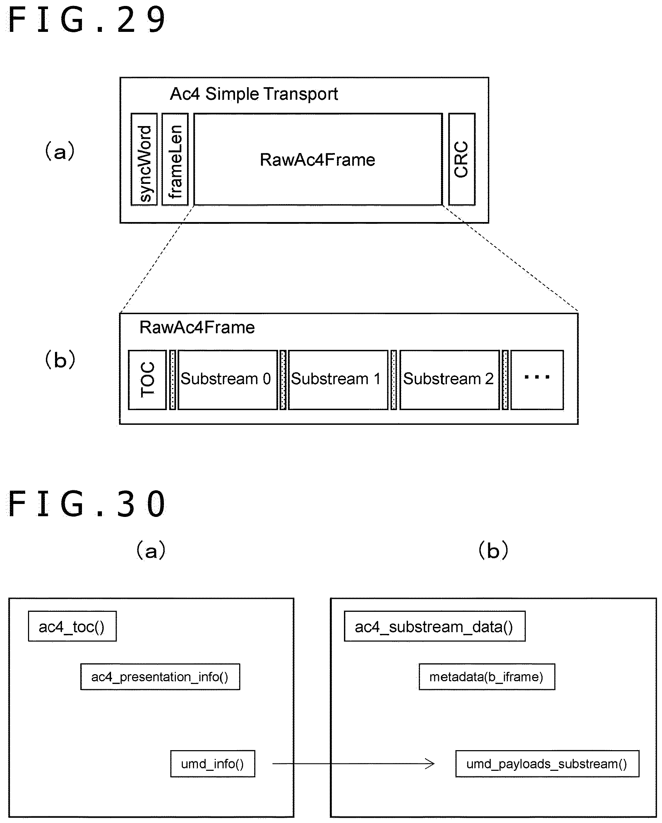

Fig. 29 is a pair of diagrams illustrating a structure of an AC4 Simple Transport layer.

[Fig. 30]

Fig. 30 is a pair of diagrams illustrating schematic configurations of a TOC (ac4_toc()) and a substream (ac4_substream_data()).

[Description of Embodiments]

A description will be given below of a mode for carrying out the present invention (hereinafter referred to as an embodiment). It should be noted that the description will be given in the following order:

1. Embodiment
2. Modification example

<1. Embodiment>

[Configuration Example of the Transmission/Reception System]

Fig. 1 illustrates a configuration example of a transmission/reception system 10 as an embodiment. The transmission/reception system 10 includes a service transmitter 100 and a service receiver 200. The service transmitter 100 sends a MPEG-2 transport stream (hereinafter simply referred to as a 'transport stream TS') as a container stream (multiplexed stream) over broadcast waves or in a network packet.

The transport stream TS has a video stream, a subtitle stream, and an audio stream. The video stream has video coded data. The subtitle stream has subtitle data corresponding to a speech of a speaker. The audio stream has object coded data including audio data whose sound source is a speech of a speaker and position information regarding the sound source.

In the present embodiment, the subtitle data is TTML (Timed Text Markup Language) data having text information regarding subtitles. The audio stream has audio frames that are provided consecutively. The audio frames include audio compressed data acquired through an encoding process of audio data. In the present embodiment, MPEG-H 3D Audio is used to code audio streams.

The service transmitter 100 inserts, into an audio frame including audio data corresponding to each speech, tag information having identification information for identifying the audio data. Also, the service transmitter 100 inserts, into subtitle data corresponding to each speech, identification information for identifying the subtitle data.

Also, the service transmitter 100 inserts, into a layer of the transport stream TS as a container stream, metainformation for associating subtitle data corresponding to each speech included in the subtitle stream and audio data corresponding to each speech included in the audio stream. In the present embodiment, metainformation is table information that associates identification information added to the subtitle data corresponding to each speech and identification information added to the audio data corresponding to each speech.

The service receiver 200 receives the transport stream TS sent from the service transmitter 100 over broadcast waves or in a network packet. This transport stream TS includes a subtitle stream and an audio stream in addition to a video stream as described above.

The service receiver 200 acquires video data for display by superimposing bitmap data of a subtitle corresponding to each speech acquired through a decoding process of the subtitle stream on video data acquired through a decoding process of the video stream. Also, the service receiver 200 acquires channel data corresponding to the speech through a decoding process of the audio stream. A voice resulting from this channel data is recognized by a viewer as if the voice were heard from a direction of a speaker included in one of video image objects.

The service receiver 200 finds display coordinates of a subtitle corresponding to each of the speeches on a monitor screen on the basis of position information regarding the sound source corresponding to each of the speeches and performs control such that the bitmap data of the subtitle corresponding to each of the speeches is superimposed on the video data at the position corresponding to the display coordinates found. This makes it possible to display a subtitle corresponding to each speech at the speaker's position in a video image.

Here, the service receiver recognizes correspondence between subtitle data corresponding to each speech and audio data corresponding to each speech, for example, on the basis of metainformation for associating subtitle data corresponding to each speech included in a subtitle stream and audio data corresponding to each speech included in an audio stream that are sent inserted in the layer of the transport stream TS as a container stream.

Fig. 2 illustrates an example of a video image displayed on a monitor screen. In the example illustrated, there is a speaker (depicted by an arrow A). The speaker is included in one of objects in a video image. A voice of the speaker's speech is recognized by a viewer as if the voice were heard from the speaker's direction because of channel data acquired from rendering using audio data whose sound source is the speaker and position information regarding the sound source. Here, $(\theta, \phi, r)$ are position information. $\theta$ is the azimuth, $\phi$ is the elevation, and $r$ is the radius. In the example illustrated, although the direction 'm' is used as a reference direction, the reference direction is not limited thereto.

Also, a position where a subtitle corresponding to the speaker's speech is superimposed on the monitor screen is found, for example, as depicted by a dotted line rectangular frame (depicted by an arrow B), and the subtitle is displayed here. That is, the subtitle corresponding to the speaker's speech is displayed at the speaker's position in the video image. It should be noted that details of calculations for finding, from sound source position information, the position where a subtitle is superimposed on the monitor screen will be described later.

[Stream Generation Section of the Service Transmitter]

Fig. 3 illustrates a configuration example of a stream generation section 110 included in the service transmitter 100. This stream generation section 110 has a control section 111, a video encoder 112, a text format conversion section 113, a subtitle encoder 114, an audio encoder 115, and a multiplexer 116. The control section 111 includes a CPU 111a and controls the operation of each section of the stream generation section 110.

The video encoder 112 inputs video data SV and generates a video stream (video elementary stream) having video coded data by coding the video data SV.

The text format conversion section 113 inputs text data (character codes) as subtitle information and converts the data into subtitle information, and, in this embodiment, TTML data.

Fig. 4 illustrates a TTML structure. TTML is written in XML Base. Metadata, styling, and layout, each of which is an element, exist in a head. Fig. 5(a) illustrates a structural example of metadata (TTM: TTML Metadata). This metadata includes title information regarding the metadata and copyright information.

Fig. 5(b) illustrates a structural example of styling (TTS: TTML Styling). This styling includes, in addition to identification information (id), information such as color (color), font (fontFamily), size (fontSize), and alignment (textAlign).

Fig. 5(c) illustrates a structural example of layout (region: TTML layout). This layout includes, in addition to identification information (id) regarding a region where a subtitle is provided, information such as a start position (origin) of the region, the region's extent (extent), padding (padding), background color (backgroundColor), and alignment (displayAlign). 'subtitle_speech_region_id' is identification information regarding a subtitle speech region.

Fig. 6 illustrates a structural example of a body. In the example illustrated, three pieces of subtitle information, subtitle 1, subtitle 2, and subtitle 3 are included. Display start and end timings are written for each subtitle, and identification information regarding a subtitle speech region (subtitle_speech_region_id) and text data are also written. As for subtitle 1, for example, the display start timing is "0.76s," and the display end timing is "3.45s," and "subtitle_speech_region_id = id1," and text data is 'It seems a paradox, does it not,.'

Referring back to Fig. 3, the subtitle encoder 114 converts TTML data, acquired by the text format conversion section 113, into a variety of segments and generates a subtitle stream that includes a PES packet having these segments provided in a payload. This subtitle stream has subtitle data corresponding to a speech of a speaker.

The audio encoder 115 inputs, as audio data SA, object data of a given number of content groups together with channel data. One or a plurality of pieces of object content belong to each content group.

The audio encoder 115 acquires MPEG-H 3D Audio transport data by coding the audio data SA and generates an audio stream (audio elementary stream) including this transport data. 3D Audio transport data includes object coded data of a given number of content groups together with channel coded data.

The audio encoder 113 inserts, under control of the control section 111 and into an audio frame including audio compressed data of a sound unit corresponding to a speech of a speaker, tag information 'Speech_tag_information()' indicating that audio compressed data of this sound unit is included. Also, the audio decoder 113 inserts, under control of the control section 111 and into an arbitrary audio frame, table information 'Tag_table()' having sound unit information in an audio stream.

Fig. 7 illustrates a configuration example of MPEG-H 3D Audio transport data. In this configuration example, transport data includes a piece of channel coded data and three pieces of object coded data. The piece of channel coded data is 5.1-channel channel coded data (CD) and includes SCE1, CPE1.1, CPE1.2, LFE1, each of which is a piece of coded sample data.

The three pieces of object coded data belong to coded data (DOD) of a dialog object content group. These three pieces of object coded data are coded data of dialog objects corresponding to first, second, and third languages.

The respective pieces of coded data of the dialog objects corresponding to the first, second, and third languages include coded sample data SCE2, SCE3, and SCE4 and object metadata for rendering these pieces of coded sample data by mapping the sample data onto speakers existing at arbitrary positions. In the present embodiment, coded sample data in this object coded data is included in audio data whose sound source is a speech of a speaker.

Coded data is differentiated by type by the concept, group. In the present configuration example, 5.1-channel channel coded data is group 1 (Group 1). Also, the pieces of coded data of the dialog objects corresponding to the first, second, and third languages are group 2 (Group 2), group 3 (Group 3), and group 4 (Group 4), respectively. Also, that which can be selected between groups on the receiving side is registered as a switch group and coded. In this configuration example, group 2 (Group 2), group 3 (Group 3), and group 4 (Group 4) that belong to the dialog object content group are switch group 1 (SW Group 1) .

Fig. 8 is a diagram illustrating a structural example of an audio frame in MPEG-H 3D Audio transport data. This audio frame includes a plurality of MPEG audio frame packets (mpeg Audio Stream Packets). Each audio stream packet includes a header and a payload.

The header has information such as packet type, packet label, and packet length. Information defined in the header's packet type is provided in the payload. "SYNC" equivalent to a synchronous start code, "Frame," actual data of 3D Audio transport data, and "Config" indicating the configuration of this "Frame," are available as payload information.

"Frame" includes channel coded data and object coded data included in 3D Audio transport data. Here, channel coded data includes coded sample data of an SCE (Single Channel Element), a CPE (Channel Pair Element), an LFE (Low Frequency Element), and so on. Also, object coded data includes coded sample data of an SCE (Single Channel Element) and metadata for rendering the coded sample data by mapping the data onto a speaker existing at an arbitrary position. This metadata is included as an extension element (Ext_element).

Also, "TagTable" and "SpeechTagInformation" defined anew in the present embodiment exist in payload information. "SpeechTagInformation" includes tag information 'Speech_tag_information()' described above, and "TagTable" includes table information 'Tag_table()' described above. Fig. 9 illustrates that 'SpeechTagInformation' for including tag information 'Speech_tag_information()' and 'TagTable' for including table information 'Tag_table()' are defined anew.

Fig. 10 illustrates an example of correspondence between an audio stream having audio frames including audio compressed data provided consecutively and sound units. In this example, a sound unit 1 having voice details 1 and a sound unit 2 having voice details 2 exist.

The sound unit 1 has a start position in an audio frame f1 and an end position in an audio frame f2. A sample-by-sample offset of the audio frame f1 from the beginning of the frame to the start position is "xs1," and a sample-by-sample offset of the audio frame f2 from the beginning of the frame to the end position is "xe1." Also, the sound unit 2 has a start position in an audio frame f3 and an end position in an audio frame f4. A sample-by-sample offset of the audio frame f3 from the beginning of the frame to the start position is "xs2," and a sample-by-sample offset of the audio frame f4 from the beginning of the frame to the end position is "xe2."

Fig. 11 illustrating, in a simplified manner, examples of details of tag information 'Speech_tag_information()' included in an audio frame. It should be noted that frame count information, group identification information, switch group information, and so on are omitted in this example.

Fig. 11(a) is an example in which an audio frame includes a start position of a sound unit (refer to the audio frames f1 and f3 in Fig. 10). In this case, information such as sound unit identification information 'speech_id,' originator identification information 'speaker_id,' type information 'sted_type,' and offset information 'sample_offset' exists.

"speech_id = 1" indicates that identification information regarding the corresponding sound unit is "1." "speaker_id = 1" indicates that identification information regarding the originator (speaker) of the corresponding sound unit is "1." "sted_type = 1" indicates that type information is "1," that is, that a sound unit start position is included. Then, "sample_offset = xs" indicates that the sample-by-sample offset from the beginning of the frame to the start position is "xs."

Fig. 11(b) is an example in which an audio frame includes neither a start position nor an end position (refer to the audio frames starting from the one following the audio frame f1 to the one previous to the audio frame f2 and the audio frames starting from the one following the audio frame f3 to the one previous to the audio frame f4 in Fig. 10). In this case, information such as sound unit identification information 'speech_id,' originator identification information 'speaker_id,' and type information 'sted_type' exists.

"speech_id = 1" indicates that identification information regarding the corresponding sound unit is "1." "speaker_id = 1" indicates that identification information regarding the originator (speaker) of the corresponding sound unit is "1." "sted_type = 3" indicates that type information is "3," that is, that a sound unit continues with no start position or end position included.

Fig. 11(c) is an example in which an audio frame includes an end position of a sound unit (refer to the audio frames f2 and f4 in Fig. 10). In this case, information such as sound unit identification information 'speech_id,' originator identification information 'speaker_id,' type information 'sted_type,' and offset information 'sample_offset' exists.

"speech_id = 1" indicates that identification information regarding the corresponding sound unit is "1." "speaker_id = 1" indicates that identification information regarding the originator (speaker) of the corresponding sound unit is "1." "sted_type = 2" indicates that type information is "2," that is, that a sound unit end position is included. Then, "sample_offset = xe" indicates that the sample-by-sample offset from the beginning of the frame to the end position is "xe."

Fig. 12 illustrates an example of insertion of tag information 'Speech_tag_information()' and table information 'Tag_table()' into an audio stream. This example focuses on group 2 (Group_id = 2) of switch group 1 (SW_group_id = 1) and illustrates a case in which speaker 1 (speaker_id = 1), speaker 2 (speaker_id = 2), and speaker 3 (speaker_id = 3) exist as originators of sound units.

Tag information 'Speech_tag_information()' regarding four sound units is inserted into the audio stream at frame positions C1, C2, C3, and C4. Each piece of sound unit tag information is normally inserted over a plurality of frames. C1, C2, C3, and C4 individually illustrate frame counts indicating frame positions from the beginning of a service.

Tag information inserted at the C1 frame position corresponds to the sound unit (speech id=1) relating to the voice of the speaker 2 (speaker_id = 2). Tag information inserted at the C2 frame position corresponds to the sound unit (speech id=2) relating to the voice of the speaker 2 (speaker_id = 2). Tag information inserted at the C3 frame position corresponds to the sound unit (speech id=3) relating to the voice of the speaker 1 (speaker_id = 1). Tag information inserted at the C4 frame position corresponds to the sound unit (speech id=4) relating to the voice of the speaker 3 (speaker_id = 3) .

Table information 'Tag Table 1' having information regarding the four sound units is inserted into the audio stream at a frame position prior to the frame positions C1, C2, C3, and C4 at which the four sound units are inserted. Fig. 13 illustrates an example of details of the table information 'Tag Table 1.' In addition to switch group identification information 'SW_group_id' and group identification information 'Group_id' that are common to each of the sound units, sound unit information 'Speech_id,' originator identification information 'Speaker_id,' and frame count information 'Audio_frame_count' exist for each sound unit.

Fig. 14 illustrates a structural example (syntax) of tag information 'Speech_tag_information().' Fig. 15 illustrates a structural example (syntax) of table information 'Tag table().' Fig. 16 illustrates details (semantics) of main pieces of information in these structural examples.

A description will be given first of a structural example of tag information 'Speech_tag_information().' The 16-bit field of 'audio_frame_count' indicates the frame position of the audio frame, into which this tag information is inserted, from the beginning of the service as a frame count value. The 8-bit field of 'num_of_speeches' indicates the number of sound units. Each of the fields, the 8-bit field of 'speech_id,' the 8-bit field of 'group_id,' the 8-bit field of 'sw_group_id,' the 8-bit field of 'speaker_id,' the 2-bit field of 'sted_type,' and the 14-bit field of 'sample_offset' repeatedly exists as many times as the number of sound units.

The field of 'speech_id' indicates sound unit identification information. The field of 'group_id' indicates group identification information. The field of 'sw_group_id' indicates switch group identification information. The field of 'speaker_d' indicates identification information regarding the originator (speaker). The field of 'sted_type' indicates that a start position or an end position of a sound unit is included or that neither a start position nor an end position are included (a sound unit continues). For example, "01" indicates that a start position is included, "10" indicates that an end position is included, and "11" indicates that neither a start position nor an end position are included (a sound unit continues).

The field of 'sample_offset' indicates the sample-by-sample offset from the beginning of the frame to the sound unit start position/end position. When 'sted_type' is "01," this indicates the sample-by-sample offset from the beginning of the frame to the start position. When 'sted_type' is "10," this indicates the sample-by-sample offset from the beginning of the frame to the end position.

A description will be given next of a structural example of table information 'Tag_table().' The 8-bit field of 'group_id' indicates group identification information. The 8-bit field of 'sw_group_id' indicates switch group identification information. The 8-bit field of 'num_of_speeches' indicates the number of sound units. Each of the 8-bit field of 'speech_id,' the 8-bit field of 'speaker_id,' and the 16-bit field of 'audio_frame_count' repeatedly exists as many times as the number of sound units.

The field of 'speech_id' indicates sound unit identification information. The field of 'speaker_id' indicates identification information regarding the originator (speaker). The field of 'audio_frame_count' indicates the frame position of the audio frame, in which a sound unit start position is included, from the beginning of the service as a frame count value.

Referring back to Fig. 3, the multiplexer 116 individually packetizes a video stream output from the video encoder 112, a subtitle stream output from the subtitle encoder 114, and an audio stream output from the audio encoder 115 into a PES packet, and further into a transport packet, followed by multiplexing of the packets, thereby acquiring the transport stream TS as a container stream (multiplexed stream).

The multiplexer 116 inserts, under control of the control section 111 and into the layer of the transport stream TS, metainformation for associating subtitle data corresponding to each speech included in the subtitle stream and audio data corresponding to each speech included in the audio stream. In the present embodiment, a link table descriptor (Link_table_descriptor) is inserted into an audio elementary stream loop and/or a subtitle elementary stream loop existing under a PMT (Program Map Table).

Fig. 17 illustrates a structural example (syntax) of the link table descriptor. The 8-bit field of 'link_table_descriptor_tag' indicates the descriptor type. Here, the field indicates that the descriptor type is link table descriptor. The 8-bit field of 'Link_table_descriptor_length' indicates the descriptor length (size), and the subsequent byte count is indicated as a descriptor length.

The 8-bit field of 'num_of_groups' indicates the number of groups. The following elements are repeated as many times as this number. The 8-bit field of 'stream_id' is used to identify an audio stream in the case where a plurality of streams are included. A transport stream can be identified by using this information and 'stream ID' indicated by "MPEG-H 3D Audio Multi-Stream Descriptor." The field of 'group_id' indicates group identification information. The field of 'sw_group_id' indicates switch group identification information. The 8-bit field of 'target_subtitle_language' indicates the language of the subtitle to be linked.

The 8-bit field of 'num_of_speeches' indicates the number of sound units. The 8-bit field of 'speech_id,' the 8-bit field of 'speaker_id,' and the 8-bit field of 'subtitle_speech_region_id' repeatedly exist as many times as the number of sound units. The field of 'speech_id' indicates sound unit identification information. The field of 'speaker_id' indicates identification information regarding the originator (speaker). The field of 'subtitle_speech_region_id' indicates identification information regarding the subtitle speech region.

Tag information is inserted into an audio frame including audio data corresponding to each speech of the speaker, and identification information 'speech_id' for identifying audio data is included in the tag information (refer to Fig. 18(a) and Fig. 14). Also, identification information 'subtitle_speech_region_id' for identifying the subtitle data is included in subtitle data corresponding to each speech of the speaker (refer to Fig. 18(b) and Fig. 5(c)). Therefore, as 'speech_id' and 'subtitle_speech_region_id' are associated by a link table descriptor (refer to Fig. 18(c)), subtitle data corresponding to each speech included in a subtitle stream and audio data corresponding to each speech included in an audio stream are associated.

The operation of the stream generation section 110 illustrated in Fig. 3 will be described briefly. The video data SV is supplied to the video encoder 112. The video data SV is coded by this video encoder 112, generating a video stream including coded video data. This video stream is supplied to the multiplexer 116.

Also, text data (character codes) DT as subtitle information is supplied to the text format conversion section 113. TTML data is acquired by this text format conversion section 113 as text information. In this case, identification information 'subtitle_speech_region_id' of the subtitle speech region is included in the subtitle data corresponding to each speech of the speaker (refer to Fig. 5(c)).

TTML data acquired by the text format conversion section 113 is supplied to the subtitle encoder 114. The TTML data is converted by the subtitle encoder 114 into a variety of segments, generating a subtitle stream included in a PES packet having these segments provided in a payload. This subtitle stream is supplied to the multiplexer 116.

Also, the audio data SA is supplied to the audio encoder 115. Object data of a given number of content groups is included in this audio data SA together with channel data. Here, one or a plurality of pieces of object content belong to each content group.

The audio encoder 115 acquires 3D Audio transport data by coding the audio data SA. Object coded data of a given number of content groups is included in this 3D Audio transport data together with channel coded data. Then, an audio stream including this 3D Audio transport data is generated by the audio encoder 115.

In this case, tag information is inserted into an audio frame including audio data corresponding to each speech of the speaker. The tag information has identification information for identifying the audio data and includes 'speech_id' (refer to Fig. 14). Also, table information 'Tag_table()' having sound unit information in the audio stream is inserted into an arbitrary audio frame by the audio encoder 115 under control of the control section 111.

The video stream generated by the video encoder 112 is supplied to the multiplexer 116. Also, the subtitle stream generated by the subtitle encoder 114 is supplied to the multiplexer 116. Further, the audio stream generated by the audio encoder 115 is supplied to the multiplexer 116. The stream supplied from each encoder is packetized into a PES packet, and further into a transport packet by the multiplexer 116, followed by multiplexing, allowing the transport stream TS to be acquired.

At this time, metainformation is inserted into the layer of the transport stream TS by the multiplexer 116. The metainformation is used to associate subtitle data corresponding to each speech included in the subtitle stream and audio data corresponding to each speech included in the audio stream. Specifically, a link table descriptor (refer to Fig. 17) is inserted. This descriptor has description for associating 'speech_id' and 'subtitle_speech_region_id.'

[Configuration of the Transport Stream TS]

Fig. 19 illustrates a configuration example of the transport stream TS. In this configuration example, a PES packet 'video PES' of the video stream identified by PID1, a PES packet 'audio PES' of the audio stream identified by PID2, and a PES packet 'subtitle PES' of the subtitle stream identified by PID3, exist.

An audio stream (Audio coded stream) is inserted into a PES payload of the PES packet of the audio stream. In this audio stream, tag information 'Speech_tag_information()' is inserted into an audio frame including audio data corresponding to each speech of the speaker. Table information 'Tag_table()' is also inserted into the audio frame. Identification information 'speech_id' for identifying the audio data is included in the tag information (refer to Fig. 14).

A subtitle stream (Subtitle coded stream) is inserted into a PES payload of the PES packet of the subtitle stream. Identification information 'subtitle_speech_region_id' for identifying the subtitle data is included in the subtitle information corresponding to each speech of the speaker (refer to Fig. 5(c)).

Also, a PMT (Program Map Table) is included in the transport stream TS as PSI (Program Specific Information). PSI is information stating to which program each elementary stream included in the transport stream belongs. A program loop that describes information relating to the program as a whole exists in the PMT.

Also, elementary stream loops, each having information relating to each elementary stream, exist in the PMT. In this configuration example, a video elementary stream loop (video ES loop) corresponding to the video stream, an audio elementary stream loop (audio ES loop) corresponding to the audio stream, and a subtitle elementary stream loop (subtitle ES loop) corresponding to the subtitle stream exist.

In the video elementary stream loop (video ES loop), information such as stream type and PID (packet identifier) is provided to correspond to the video stream, and a descriptor is also provided that states information relating to the video stream. The value of 'Stream_type' of the video stream is set to '0×24,' and PID information indicates PID1 assigned to the PES packet 'video PES' of the video stream as described above. An HEVC descriptor is provided as a descriptor.

Also, in the audio elementary stream loop (audio ES loop), information such as stream type and PID (packet identifier) is provided to correspond to the audio stream, and a descriptor is also provided that states information relating to the audio stream. The value of 'Stream_type' of the audio stream is set to '0×2C,' and PID information indicates PID2 assigned to the PES packet 'audio PES' of the audio stream as described above. A link table descriptor (refer to Fig. 17) is provided as a descriptor. A link table descriptor is used to indicate correspondence between subtitle data corresponding to each speech included in the subtitle stream and audio data corresponding to each speech included in the audio stream by associating 'speech_id' and 'subtitle_speech_region_id' (refer to Fig. 17).

Also, information such as stream type and PID (packet identifier) is provided in the subtitle elementary stream loop (subtitle ES loop) to correspond to the subtitle stream, and a descriptor for describing information relating to the audio stream thereof is also provided. 'Stream_type' of this subtitle stream is "private stream," and PID information indicates PID3 assigned to the PES packet 'audio PES' of the video stream as described above. A link table descriptor (refer to Fig. 17) is provided as a descriptor.

It should be noted that although provided in both the audio elementary stream loop and the subtitle elementary stream loop in the example illustrated, a link table descriptor may be provided only in one of the two loops.

[Configuration Example of the Service Receiver]

Fig. 20 illustrates a configuration example of the service receiver 200. The service receiver 200 has a reception section 201, a demultiplexer 202, a video decoding section 203, a video superimposition section 204, a panel drive circuit 205, and a display panel 206. The service receiver 200 also has an audio decoding section 214, a voice output processing circuit 215, a speaker system 216, a subtitle decoding section 217, a display coordinates mapping section 218, and a superimposition position correction section 219. The service receiver 200 also has a CPU 221, a flash ROM 222, a DRAM 223, an internal bus 224, a remote control reception section 225, and a remote control transmitter 226.

The CPU 221 controls the operation of each section of the service receiver 200. The flash ROM 222 stores control software and retains data. The DRAM 223 is included in a work area of the CPU 221. The CPU 221 controls each section of the service receiver 200 by loading the software and data read out from the flash ROM 222 into the DRAM 223 and starting the software.

The remote control reception section 225 receives a remote control signal (remote control code) sent from the remote control transmitter 226, supplying the signal to the CPU 221. The CPU 221 controls each section of the service receiver 200 on the basis of this remote control code. The CPU 221, the flash ROM 222, and the DRAM 223 are connected to the internal bus 224.

The reception section 201 receives the transport stream TS as a container stream (multiplexed stream) sent over broadcast waves or in a network packet from the service transmitter 100. This transport stream TS has a subtitle stream and an audio stream in addition to a video stream. The subtitle stream has subtitle data corresponding to a speech of a speaker. The audio stream has object coded data including audio data whose sound source is a speech of a speaker and position information regarding the sound source.

In the audio stream, tag information 'Speech_tag_information()' is inserted into an audio frame including audio data corresponding to each speech of the speaker, and table information 'Tag_table()' is inserted. Identification information 'speech_id' for identifying the audio data is included in the tag information (refer to Fig. 14). Also, identification information 'subtitle_speech_region_id' for identifying the subtitle data is included in subtitle data corresponding to each speech of the speaker (refer to Fig. 5(c)).

Also, a link table descriptor is provided in the layer of the transport stream TS. A link table descriptor is used to indicate correspondence between subtitle data corresponding to each speech included in the subtitle stream and audio data corresponding to each speech included in the audio stream by associating 'speech_id' and 'subtitle_speech_region_id' (refer to Fig. 17).

The demultiplexer 202 extracts the video stream, the subtitle stream, and the audio stream from the transport stream TS. The demultiplexer 202 also extracts various pieces of information such as descriptor information from the transport stream TS and sends the information to the CPU 221. The link table descriptor described above is included in these various pieces of information. The CPU 221 associates 'speech_id' and 'subtitle_speech_region_id' using this descriptor and therefore recognizes correspondence between subtitle data corresponding to each speech included in the subtitle stream and audio data corresponding to each speech included in the audio stream.

The video decoding section 203 acquires non-compressed video data through a decoding process of the video stream extracted by the demultiplexer 202. The video superimposition section 204 superimposes subtitle bitmap data (display data) on the video data acquired by the video decoding section 203. The panel drive circuit 205 drives the display panel 206 on the basis of image data for display acquired by the video superimposition section 204. The display panel 206 includes, for example, an LCD (Liquid Crystal Display), an organic EL display (organic electroluminescence display), or other type of display.

The audio decoding section 214 acquires audio data for driving each of the speakers included in the speaker system 216 through a decoding process of the audio stream extracted by the demultiplexer 202.

In this case, as for coded data of a plurality of pieces of object content included in the switch group, the audio decoding section 214 decodes, under control of the CPU 221 and of coded data of a given pieces of object content included in the audio stream, coded data of only one of the pieces of object content relating to user selection.

Also, the audio decoding section 214 extracts a variety of pieces of information inserted in the audio stream and sends them to the CPU 221. Tag information 'Speech_tag_information()' and table information 'Tag_table()' described above are also included in these pieces of information.

The CPU 221 recognizes, using this tag information and for each audio frame, whether the audio frame includes audio data of a sound unit corresponding to the speaker's speech (coded sample data), sound unit identification information regarding the sound unit, originator identification information regarding the sound unit, frame count information, type information indicating whether a start position or an end position is included, offset information from the beginning of the frame to the start position or the end position, and so on.

Also, the CPU 221 recognizes, using this table information, information regarding a given sound unit within the audio stream, that is, frame count information indicating the frame position of each sound unit from the beginning of the service, sound unit identification information regarding each sound unit, originator identification information regarding each sound unit, and so on.

Fig. 21 illustrates a configuration example of the audio decoding section 214. The audio decoding section 214 has a decoder 251, an object renderer 252, and a mixer 253.

The decoder 251 acquires object data of a given number of pieces of object content together with channel data through a decoding process of the object stream extracted by the demultiplexer 202. This decoder 251 performs a process nearly opposite to that performed by the audio encoder 115 of the stream generation section 110 illustrated in Fig. 3. It should be noted that, as for a plurality of pieces of object content included in the switch group, the decoder 251 acquires, under control of the CPU 221, object data of only one piece of object content relating to user selection.

Also, the decoder 251 extracts various pieces of information inserted in the audio stream and sends them to the CPU 221. Tag information 'Speech_tag_information()' and table information 'Tag_table()' described above are also included in these pieces of information.

The object renderer 252 acquires channel data of a given number of pieces of object content through a rendering process of object data of the given number of pieces of object content (audio data, position information).

Fig. 22 illustrates an overview of a rendering process in the object renderer 252. In this rendering process, a sound image position p is found by using position information $(\theta, \phi, r)$ included in object data in each of triangular areas (LT-LB-RB) and (RT-LB-RB) in which three speakers are included, and channel data is acquired by mapping audio data onto each speaker from the sound image position p. It should be noted that the number and layout of speakers are not limited to those in the example illustrated.

This rendering process is also similarly performed on object data relating to audio data whose sound source is the speaker's speech. Because of channel data acquired by such a rendering process, the speaker's speech is recognized by a viewer as if the speech were heard from the sound image position p, and therefore, from the speaker's direction in a video image (refer to Fig. 2).

The mixer 253 acquires final channel data for driving each of the speakers included in the speaker system 216 (audio data for driving each speaker) by combining channel data acquired by the decoder 251 and channel data of each piece of object content acquired by the object renderer 252.

Referring back to Fig. 20, the voice output processing circuit 215 performs various processes such as D/A conversion and amplification on audio data for driving each speaker acquired by the audio decoding section 214, supplying the data to the speaker system 216. The speaker system 216 includes a plurality of speakers with a plurality of channels such as 2 channels, 5.1 channels, 7.1 channels, and 22.2 channels.

The subtitle decoding section 217 acquires bitmap data of a subtitle corresponding to the speaker's speech by processing subtitle data of each region included in the subtitle stream extracted by the demultiplexer 202.

The display coordinates mapping section 218 finds, in relation to the bitmap data of the subtitle acquired by the subtitle decoding section 217 described above, display coordinates (x1, y1) on the monitor screen of the subtitle using, of position information ($\theta$, $\phi$, r) in the object data relating to the audio data corresponding to this subtitle, information regarding the azimuth $\theta$ and the elevation $\phi$. Here, correspondence between the subtitle and the audio data is established, for example, on the basis of the description regarding association between 'speech_id' and 'subtitle_speech_region_id' in the of the link table descriptor.

A description will be given of an example of calculating x1 and y1 at display coordinates (x1, y1) with reference to Fig. 23. Here, we assume that the monitor is sized MW (horizontally) and MH (vertically) and that the monitor viewing distance is D. A point C is taken such that AC = AB/2 = MW/2.

At this time, each of the following equations holds:

$$\angle CVA = \gamma$$

$$\angle CVE = \angle CVA - \angle EVA = \gamma - \theta$$

Also, each of the following equations holds:

$$VE = \{1/\cos(\gamma-\theta)\}*D$$

$$PE = \{\tan(\varphi)\}*VE$$

$$KP = MH - PE$$

Further, each of the following equations holds:

$$EC = \tan(\gamma-\theta)*D$$

$$AC = \tan(\gamma)*D$$

$$AE = AC - EC$$

For this reason, letting the horizontal display resolution of the monitor be denoted by W (pixels) and the vertical display resolution of the monitor be denoted by H (pixels), x1 and y1 at the display coordinates (x1, y1) equivalent to the sound image position p can be found by the following equations (1) and (2):

$$X1 = \{1/(2*AC)\}*AE*W \cdots (1)$$

$$Y1 = (1/MH)*KP*H \cdots (2)$$

It should be noted that although, in the above calculation example, a direction A is a reference direction, the display coordinates (x1, y1) can be found in a similar manner even in the case where other direction is a reference direction. For example, in the case where a direction C is a reference direction, the above $\theta$ is replaced with $\gamma-\theta$ in the equations. Fig. 23 illustrates, with a dashed line, an example in which the subtitle display position is taken at point P thus found at the display coordinates (x1, y1). It should be noted that various options, including whether to take P at the end position or at the center of the region area or whether to keep it within the monitor display area, can be taken.

Referring back to Fig. 20, the superimposition position correction section 219 performs a position conversion process on the bitmap data of the subtitle corresponding to the speaker's speech acquired by the subtitle decoding section 217 such that the superimposition on the video data takes place at the position corresponding to the display coordinates (x1, y1) found by the display coordinates mapping section 218, supplying the data to the video superimposition section 204 thereafter. Such a position conversion process allows the subtitle corresponding to the speaker's speech to be displayed at the speaker's position in the video image (refer to Fig. 2).

A brief description will be given of the operation of the service receiver 200 illustrated in Fig. 20. The service receiver 200 receives the transport stream TS sent from the service transmitter 100 over broadcast waves or in a network packet. This transport stream TS includes a subtitle stream and an audio stream in addition to a video stream as described above.

The transport stream TS received by the reception section 201 is supplied to the demultiplexer 202. The demultiplexer 202 extracts the video stream, the subtitle stream, and the audio stream from the transport stream TS.

Also, the demultiplexer 202 extracts various pieces of information such as descriptor information from the transport stream TS and sends them to the CPU 221. The link table descriptor described above is included in these various pieces of information. The CPU 221 associates 'speech_id' and 'subtitle_speech_region_id' using this descriptor and therefore recognizes correspondence between subtitle data corresponding to each speech included in the subtitle stream and audio data corresponding to each speech included in the audio stream.

The video stream extracted from the transport stream TS is supplied to the video decoding section 203. The video decoding section 203 acquires non-compressed video data through a decoding process of the video stream. This video data is supplied to the video superimposition section 204.

Also, the audio stream extracted by the demultiplexer 202 is supplied to the audio decoding section 214. The audio decoding section 214 acquires audio data for driving each of the speakers included in the speaker system 216 through a decoding process of the audio stream.

Also, the audio decoding section 214 extracts a variety of pieces of information inserted in the audio stream and sends them to the CPU 221. Tag information 'Speech_tag_information()' and table information 'Tag_table()' are also included in these pieces of information.

The CPU 221 recognizes, using tag information and for each audio frame, whether the audio frame includes audio compressed data of a given sound unit, sound unit identification information regarding the sound unit, originator identification information regarding the sound unit, frame count information, type information indicating whether a start position or an end position is included, offset information from the beginning of the frame to the start position or end position, and so on.

Also, the CPU 221 recognizes, using table information, information regarding a given sound unit within the audio stream, that is, frame count information indicating the frame position of each sound unit from the beginning of the service, sound unit identification information regarding each sound unit, originator identification information regarding each sound unit, and so on.

Audio data for driving each of the speakers acquired by the audio decoding section 214 is supplied to the voice output processing circuit 215. The voice output processing circuit 215 performs necessary processes such as D/A conversion and amplification on this audio data.

The audio data after being processed by the voice output processing circuit 215 is supplied to the speaker system 216. As a result, acoustic output corresponding to the display image on the display panel 206 is acquired from the speaker system 216. In this case, as a result of the rendering process by the object renderer 252 described above, the speaker's speech becomes recognized by the viewer as if the speech were heard from the direction of the speaker in the video image (refer to Fig. 2).

Also, the subtitle stream extracted by the demultiplexer 202 is supplied to the subtitle decoding section 217. The subtitle decoding section 217 acquires bitmap data of the subtitle corresponding to the speaker's speech through processing of the subtitle data of each region included in the subtitle stream extracted by the demultiplexer 202. This bitmap data is supplied to the superimposition position correction section 219.

Also, of position information $(\theta, \phi, r)$ in the object data relating to the audio data corresponding to this subtitle, information regarding the azimuth $\theta$ and the eleva-

tion $\phi$ is supplied from the audio decoding section 214 to the display coordinates mapping section 218. Here, correspondence between the subtitle and the audio data is established, for example, on the basis of the description regarding association between 'speech_id' and 'subtitle_speech_region_id' in the link table descriptor.

The display coordinates mapping section 218 finds, in relation to the bitmap data of the subtitle acquired by the subtitle decoding section 217, display coordinates (x1, y1) on the monitor screen of the subtitle using information regarding the azimuth $\theta$ and the elevation $\phi$. These display coordinates (x1, y1) are supplied to the superimposition position correction section 219.

The superimposition position correction section 219 performs a position conversion process on the bitmap data of the subtitle corresponding to the speaker's speech acquired by the subtitle decoding section 217 such that the superimposition takes place at the position corresponding to the display coordinates (x1, y1). The bitmap data of the subtitle after the position conversion is supplied to the video superimposition section 204.

The video superimposition section 204 acquires video data for display through superimposition of the subtitle bitmap data, subjected to the position conversion process by the superimposition position correction section 219, on the video data acquired by the video decoding section 203. This video data for display is supplied to the panel drive circuit 205.

The panel drive circuit 205 drives the display panel 206 on the basis of the video data for display. This allows a video image corresponding to the video data for display to be displayed on the display panel 206. In this case, as a result of the position conversion process by the superimposition position correction section 219, the subtitle corresponding to the speaker's speech is displayed at the speaker's position in the video image (refer to Fig. 2).

As described above, in the transmission/reception system 10 illustrated in Fig. 1, the service transmitter 100 inserts, into the layer of the transport stream TS, metainformation for associating subtitle data corresponding to each speech included in the subtitle stream and audio data corresponding to each speech included in the audio stream. For this reason, in the case where the subtitle display position is controlled on the receiving side using position information regarding the sound source included in object coded data such that the subtitle is displayed at the speaker's position in the video image, it becomes easy to use appropriate position information by using this metainformation.

Also, in the transmission/reception system 10 illustrated in Fig. 1, the service receiver 200 finds the display coordinates of the subtitle corresponding to each of the speeches on the monitor screen on the basis of position information regarding the sound source corresponding to each of the speeches and performs control such that the bitmap data of the subtitle corresponding to each of the speeches is superimposed on the video data at the position corresponding to the display coordinates found. For this reason, it is possible to display a subtitle corresponding to a speech of a speaker at the speaker's position in a video image.

## <2. Modification Example>

It should be noted that an example of single region display has described above in which one speaker existed in a video image and in which a subtitle corresponding to the speaker is superimposed on the video image (refer to Fig. 2). However, the present technology functions similarly in multi-region display in which a plurality of speakers exist in a video image and in which subtitles, each corresponding to a speech of each of the speakers, are superimposed on the video image.

That is, because 'speech_id' and 'subtitle_speech_region_id' are associated with each other, it is possible to display a subtitle corresponding to a speech of each speaker at the corresponding speaker's position by individually finding the display coordinates of the subtitle corresponding to the speech of each of the speakers. In the example illustrated, subtitles corresponding to speeches of speakers in the video image depicted by arrows A1, A2, and A3 appear at positions of dotted line rectangular frames depicted by arrows B1, B2, and B3, respectively.

Also, the embodiment described above has illustrated an example in which a container stream (multiplexed stream) is an MPEG-2 transport stream (transport stream TS). However, the present technology is similarly applicable to a system that makes deliveries using container streams in MP4 format or in other formats. Among examples thereof are an MPEG-DASH-based stream delivery system and a transmission/reception system that handles MMT (MPEG Media Transport) structure transport stream.

Fig. 25 illustrates a configuration example of an MMT stream in the case where media access information (data to be encapsulated into a container) is sent inserted in an audio stream. MMT packets of respective assets such as video, audio, and subtitle exist. In this configuration example, an MMT packet for an audio asset identified by ID2 and an MMT packet for a subtitle asset identified by ID3 exist together with an MMT packet for a video asset identified by ID1.

In the audio asset (audio stream), tag information 'Speech_tag_information()' is inserted into an audio frame that includes audio data corresponding to each speech of the speaker, and table information 'Tag_table()' is inserted. Identification information 'speech_id' for identifying audio data is included in the tag information (refer to Fig. 14). In the subtitle asset (subtitle stream), identification information 'subtitle_speech_region_id' for identifying subtitle data is included in the subtitle data corresponding to each speech of the speaker (refer to Fig. 5(c)).

Also, message packets such as PA (Packet Access) message packet exist in the MMT stream. The PA message packet includes tables such as MMT packet table. The MP table includes information for each asset. In this case, a link table descriptor (refer to Fig. 17) is also included as asset information regarding an audio and/or subtitle asset.

Fig. 26(a) illustrates a configuration example of an MP4 stream (file) including audio track (track A) data. Fig. 26(b) illustrates a configuration example of an MP4 stream (file) including subtitle track (track B) data. The example illustrated is an example in the case of a fragmented MP4. A given number of movie fragments are provided in an MP4 stream. A "moof" box and a "mdat" box are included in a movie fragment. Control information is included in the "moof" box. The main body of media data is included in the "mdat" box. Because a fragment acquired by fragmentation of track data is placed in the "mdat" box, control information placed in the "moof" box is control information regarding these fragments.

In the MP4 stream 'audio bitstream' corresponding to the audio track illustrated in Fig. 26(a), a given number of audio frames are provided in the "mdat" box of each movie fragment. Also, in this MP4 stream 'audio bitstream,' a "traf" box exists in the "moof" box of each movie fragment, and a "tfdt" box exists in the "traf" box. Decoding time "baseMediaDecodeTime" of the first access unit after the "moof" box is written in this "tfdt" box.

Also, a "tfdt" box exists in the "moof" box, and "sgpd" box exists in that "tfdt" box, and further, a "tscl" box exists in the "sgpd" box. 'Audiostreamtype' and 'Attribute' parameters are written in this "tscl" box. 'Audiostreamtype = AudioCodec' indicates an audio compressed format. 'Attribute = speechtag' indicates that tag information 'Speech_tag_information()' is inserted in the audio stream.

In an MP4 stream 'subtitle bitstream' corresponding to the subtitle track illustrated in Fig. 26(b), a given number of TTML documents are provided in the "mdat" box of each of the movie fragments. Also, in this MP4 stream 'subtitle bitstream,' a "traf" box exists in the "moof" box of each of the movie fragments, and a "tfdt" box exists in the "traf" box. Presentation time "baseMediaPresentationTime" of the first subtitle after the "moof" box is written in this "tfdt" box.

Further, a "tfdt" box exists in the "moof" box, and a "sgpd" box exists in that "tfdt" box, and further, a "tscl" box exists in the "sgpd" box. 'subtitlestreamtype' and 'Attribute' parameters are written in this "tscl" box. 'subtitlestreamtype = TTML' indicates that the subtitle data format is TTML. 'Attribute = speechregionid' indicates that speech region identification information 'subtitle_speech_region_id' is inserted in the subtitle data.

Fig. 27 illustrates an example of describing an MPD file. Also, Fig. 28 illustrates details of main pieces of information in the example of describing an MPD file. As has been previously known, a media stream (MP4 stream) and an MPD file as a metafile are sent to the receiving side via a communication network transport channel in an MPEG-DASH-based stream delivery system.

'<AdaptationSet mimeType= "audio/mp4" group= "1">' is written to indicate that an adaptation set (AdaptationSet) exists for an audio stream, that an audio stream in MP4 file structure is supplied, and that group 1 is assigned.

Also, in this adaptation set (AdaptationSet) for the audio stream, '<SupplementaryDescriptor schemeIdUri= "urn:brdcst:codecType" value= "Audio Codec Stream"/>' is written to indicate an audio stream codec type. MPEG-H, AAC, AC3, AC4, and so on are available as codecs.

Also, in this adaptation set (AdaptationSet) for the audio stream, '<SupplementaryDescriptor schemeIdUri= "urn:brdcst:speechtag" value= "true"/>' is written to indicate that tag information 'Speech_tag_information()' is included.

'<AdaptiveSet mimeType= "subtitle/mp4" group= "2">' is written to indicate that an adaptation set (AdaptationSet) exists for a subtitle stream, that a subtitle stream in MP4 file structure is supplied, and that group 2 is assigned.

Also, in this adaptation set (AdaptationSet) for the subtitle stream, '<SupplementaryDescriptor schemeIdUri= "urn:brdcst:codecType" value= "Subtitle Codec Stream"/>' is written to indicate a subtitle stream codec type. TTML and other codecs are available.

Also, in this adaptation set (AdaptationSet) for the subtitle stream, '<SupplementaryDescriptor schemeIdUri= "urn:brdcst:speechregionid" value= "true"/>' is written to indicate that speech region identification information 'subtitle_speech_region_id' is included.

Also, in the embodiment described above, an example has illustrated in which the audio compression format is MPEG-H 3D Audio. However, the present technology is similarly applicable to a case in which other audio compression format such as AAC, AC3, and AC4 is used.

Fig. 29(a) illustrates a structure of an AC4 Simple Transport layer. A syncWord field, a frame Length field, a 'RawAc4Frame' field as a coded data field, and a CRC field exist. In the 'RawAc4Frame' field, a TOC (Table Of Content) field exists at the beginning, followed by a given number of Substream fields as illustrated in Fig. 29(b) .

As illustrated in Fig. 30(b), a metadata area exists in the substream (ac4_substream_data()), and a 'umd_payloads_substream()' field is provided therein. Tag information 'Speech_tag_information()' (refer to Fig. 14) and table information 'Tag_table()' (refer to Fig. 15) are placed in an 'umd_payload_byte' field inside this 'umd_payloads_substream()' field.

It should be noted that, as illustrated in Fig. 30(a), it is indicated that an 'ac4_presentation_info()' field exists in the TOC (ac4_toc()), that further an 'umd_info()' field exists therein, and that tag information and so on is inserted in the above 'umd_payloads_substream()' field in the 'umd_info()' field.

Also, in the embodiment described above, an example has illustrated in which a TTML is used as text information regarding subtitles in a given format having display timing information. However, the present technology is not limited thereto, and it is possible to use other text information having information equivalent to TTML. For example, a TTML-derived format may be used.

Also, although, in the embodiment described above, the transmission/reception system 10 including the service transmitter 100 and the service receiver 200 has illustrated, the transmission/reception system to which the present technology is applicable is not limited thereto. For example, the portion of the service receiver 200 may include a set top box and a monitor that are connected through a digital interface such as HDMI (High-Definition Multimedia Interface). It should be noted that 'HDMI' is a registered trademark.

The following configurations are merely further illustrative examples related to the present technology: A transmission apparatus including:

a video encoding section adapted to generate a video stream having video coded data;
a subtitle encoding section adapted to generate a subtitle stream having subtitle data corresponding to a speech of a speaker;
an audio encoding section adapted to generate an audio stream having object coded data including audio data whose sound source is a speech of the speaker and position information regarding the sound source;
a transmission section adapted to send a container stream in a given format including the video stream, the subtitle stream, and the audio stream; and
an information insertion section adapted to insert, into a layer of the container stream, metainformation for associating subtitle data corresponding to each speech included in the subtitle stream and audio data corresponding to each speech included in the audio stream.

In some examples,

identification information is added to each piece of subtitle data corresponding to each of the speeches, and identification information is added to each piece of audio data corresponding to each of the speeches, and
the metainformation is table information that associates the identification information added to the subtitle data corresponding to each of the speeches and the identification information added to the audio data corresponding to each of the speeches.

In some examples, tag information having the identification information is inserted into an audio frame including audio data corresponding to each of the speeches.

In some examples, the subtitle data is TTML data or data in a format derived from the TTML.

A transmission method including:

a video encoding step of generating a video stream that has video coded data;

a subtitle encoding step of generating a subtitle stream that has subtitle data corresponding to a speech of a speaker;

an audio encoding step of generating an audio stream that has object coded data including audio data whose sound source is a speech of the speaker and position information regarding the sound source;

a transmission step of sending a container stream in a given format that includes the video stream, the subtitle stream, and the audio stream by a transmission section; and

an information insertion step of inserting metainformation, into a layer of the container stream, that associates subtitle data corresponding to each speech included in the subtitle stream and audio data corresponding to each speech included in the audio stream.

A reception apparatus including:

a reception section adapted to receive a container stream in a given format including a video stream, a subtitle stream, and an audio stream, in which

the video stream has video coded data,

the subtitle stream has subtitle data corresponding to a speech of a speaker, and

the audio stream has object coded data including audio data whose sound source is the speech of the speaker and position information regarding the sound source, the reception apparatus further including

a control section adapted to control

a video decoding process by which video data is acquired through a decoding process of the video stream,

a subtitle decoding process by which bitmap data of a subtitle corresponding to the speech of the speaker is acquired through a decoding process of the subtitle stream,

a video superimposition process by which video data for display is acquired through superimposition of the bitmap data of the subtitle on the video data,

an audio decoding process by which channel data corresponding to the speech is acquired through a decoding process of the audio stream, and

a superimposition position process by which display coordinates of a subtitle corresponding to each of the speeches on a monitor screen are found on the basis of position information regarding the sound source corresponding to each of the speeches and control is performed such that the bitmap data of the subtitle corresponding to each of the speeches is superimposed on the video data at the position corresponding to the display coordinates found.

In some examples, metainformation is inserted, in the container stream, that associates subtitle data corresponding to each speech included in the subtitle stream and audio data corresponding to each speech included in the audio stream, and

the control section recognizes correspondence between subtitle data corresponding to each of the speeches and audio data corresponding to each of the speeches.

A reception method including:

a reception step of receiving a container stream in a given format including a video stream, a subtitle stream, and an audio stream by a reception section, in which

the video stream has video coded data,

the subtitle stream has subtitle data corresponding to a speech of a speaker, and

the audio stream has object coded data including audio data whose sound source is the speech of the speaker and position information regarding the sound source, the reception method further including

a video decoding step of acquiring video data through a decoding process of the video stream;

a subtitle decoding step of acquiring bitmap data of a subtitle corresponding to the speech of the speaker through a decoding process of the subtitle stream;

a video superimposition step of acquiring video data for display through superimposition of the bitmap data of the subtitle on the video data;

an audio decoding step of acquiring channel data corresponding to the speech through a decoding process of the audio stream; and

a control step of finding display coordinates of a subtitle corresponding to each of the speeches on a monitor screen on the basis of position information regarding the sound source corresponding to each of the speeches and controlling such that the bitmap data of the subtitle corresponding to each of the speeches is superimposed on the video data at the position corresponding to the display coordinates found.

A main feature of the present technology lies in facilitating use of appropriate position information through use of metainformation by inserting, into a layer of a container stream, the metainformation for associating subtitle data corresponding to each speech included in a subtitle stream and audio data corresponding to each speech included in an audio stream during control performed on a receiving side to display a subtitle at a speaker's position in a video image through use of position information of a sound source included in object coded data (refer to Figs. 18 and 19).

Also, a main feature of the present technology lies in allowing a subtitle corresponding to a speech of a speaker to be displayed at the speaker's position by finding display coordinates of a subtitle corresponding to each speech on a monitor screen on the basis of position information regarding the sound source corresponding to each of the speeches and performing control such that bitmap data of the subtitle corresponding to each of the speeches is superimposed on the video data at the position corresponding to the display coordinates found (refer to Figs. 2 and 20).

[Reference Signs List]

| | |
|---|---|
| 10 | Transmission/reception system |
| 100 | Service transmitter |
| 110 | Stream generation section |
| 111 | Control section |
| 111a | CPU |
| 112 | Video encoder |
| 113 | Text format conversion section |
| 114 | Subtitle encoder |
| 115 | Audio encoder |
| 116 | Multiplexer |
| 200 | Service receiver |
| 201 | Reception section |
| 202 | Demultiplexer |
| 203 | Video decoding section |
| 204 | Video superimposition section |
| 205 | Panel drive circuit |
| 206 | Display panel |
| 214 | Audio decoding section |
| 215 | Voice output processing circuit |
| 216 | Speaker system |
| 217 | Subtitle decoding section |
| 218 | Display coordinates mapping section |
| 219 | Superimposition position correction section |
| 221 | CPU |
| 222 | Flash ROM |
| 223 | DRAM |
| 224 | Internal bus |
| 225 | Remote control reception section |
| 226 | Remote control transmitter |
| 251 | Decoder |
| 252 | Object renderer |
| 253 | Mixer |

**Claims**

1. A reception apparatus (200) comprising:

a reception section (201) adapted to receive a container stream in a given format including a video stream, a subtitle stream, an audio stream, and metainformation, wherein
the video stream has video coded data,
the subtitle stream has subtitle data corresponding to a speech of a speaker,
the audio stream has object coded data including audio data whose sound source is the speech of the speaker and position information regarding a position of the sound source in an image of the video stream, and
the metainformation associates subtitle data corresponding to each speech included in the subtitle stream with audio data corresponding to each speech included in the audio stream and with the position information associated with said audio data,
the reception apparatus further comprising:

a control section adapted to control
a video decoding (203) process whereby video data is acquired through a decoding process of the video stream,
a subtitle decoding (217) process whereby subtitle data corresponding to the speech of the speaker is acquired through a decoding process of the subtitle stream,
an audio decoding (214) process whereby channel data corresponding to the speech is acquired through a decoding process of the audio stream, and
a displaying process to display the subtitle corresponding to a speech of speaker at the speaker's position in a video image based on the audio stream and the association in the metainformation.

2. The reception apparatus (200) of claim 1, wherein

each piece of subtitle data corresponding to each of the speeches comprises identification information, and each piece of audio data corresponding to each of the speeches comprises identification information, and
the metainformation is table information that associates the identification information of the subtitle data corresponding to each of the speeches and the identification information of the audio data corresponding to each of the speeches.

3. The reception apparatus (200) of claim 2, wherein an audio frame including audio data corresponding to each of the speeches comprises tag information having the identification information.

4. The reception apparatus (200) of any one of the previous claims, wherein
the subtitle data is TTML data or data in a format derived from the TTML.

5. A reception method comprising:

a reception step (201) of receiving a container stream in a given format including a video stream, a subtitle stream, an audio stream, and metainformation, wherein
the video stream has video coded data,
the subtitle stream has subtitle data corresponding to a speech of a speaker,
the audio stream has object coded data including audio data whose sound source is the speech of the speaker and position information regarding a position of the sound source in an image of the video stream, and
the metainformation associates subtitle data corresponding to each speech included in the subtitle stream with audio data corresponding to each speech included in the audio stream and with the position information associated with said audio data,
the reception method further comprising:

a video decoding step (203) of acquiring video data through a decoding process of the video stream,
a subtitle decoding step (217) of acquiring subtitle data corresponding to the speech of the speaker through a decoding process of the subtitle stream,
an audio decoding step (214) of acquiring channel data corresponding to the speech through a decoding process of the audio stream, and
a displaying step of displaying the subtitle corresponding to a speech of speaker at the speaker's position in a video image based on the audio stream and the association in the metainformation.

**Patentansprüche**

1. Empfangsvorrichtung (200), die Folgendes umfasst:

einen Empfangsabschnitt (201), der ausgelegt ist, einen Behälterstrom in einem gegebenen Format, das einen Videostrom, einen Untertitelstrom, einen Audiostrom und Metadaten enthält, zu empfangen, wobei
der Videostrom codierte Videodaten enthält,
der Untertitelstrom Untertiteldaten enthält, die einer Sprache eines Sprechers entsprechen,
der Audiostrom codierte Objektdaten enthält, die Audiodaten, deren Schallquelle die Sprache des Sprechers ist, und Positionsinformationen hinsichtlich einer Position der Schallquelle in einem Bild des Videostroms enthalten,
die Metadaten Untertiteldaten, die jeder der Sprachen, die im Untertitelstrom enthalten sind, entsprechen, mit Audiodaten, die jeder der Sprachen, die im Audiostrom enthalten sind, entsprechen, und mit den Positionsinformationen, die mit den Audiodaten verknüpft sind, verknüpfen und
die Empfangsvorrichtung ferner Folgendes umfasst:

einen Steuerabschnitt, der ausgelegt ist, zum Steuern
eines Prozesses zum Videodecodieren (203), wodurch Videodaten durch einen Decodierprozess des Videostroms erfasst werden,
eines Prozesses zum Untertiteldecodieren (217), wodurch Untertiteldaten, die der Sprache des Sprechers entsprechen, durch einen Decodierprozess des Untertitelstroms erfasst werden,
eines Prozesses zum Audiodecodieren (214), wodurch Kanaldaten, die der Sprache entsprechen, durch einen Decodierprozess des Audiostroms erfasst werden, und

eines Anzeigeprozesses zum Anzeigen des Untertitels, der einer Sprache eines Sprechers entspricht, bei der Position eines Sprechers in einem Videobild auf der Grundlage des Audiostroms und der Verknüpfung in den Metadaten.

2. Empfangsvorrichtung (200) nach Anspruch 1, wobei

jedes Stück von Untertiteldaten, die jeder der Sprachen entsprechen, Identifizierungsinformationen umfasst und jedes Stück von Audiodaten, die jeder der Sprachen entsprechen, Identifizierungsinformationen umfasst und die Metadaten Tabelleninformationen sind, die die Identifizierungsinformationen der Untertiteldaten, die jeder der Sprachen entsprechen, und die Identifizierungsinformationen der Audiodaten, die jeder der Sprachen entsprechen, verknüpfen.

3. Empfangsvorrichtung (200) nach Anspruch 2, wobei ein Audiorahmen, der Audiodaten, die jeder der Sprachen entsprechen, enthält, Markierungsinformationen, die die Identifizierungsinformationen enthalten, enthält.

4. Empfangsvorrichtung (200) nach einem der vorhergehenden Ansprüche, wobei die Untertiteldaten TTML-Daten oder Daten in einem Format, das aus der TTML abgeleitet ist, sind.

5. Empfangsverfahren, das Folgendes umfasst:

einen Empfangsschritt (201) des Empfangens eines Behälterstroms in einem gegebenen Format, das einen Videostrom, einen Untertitelstrom, einen Audiostrom und Metadaten enthält, wobei der Videostrom codierte Videodaten enthält, der Untertitelstrom Untertiteldaten enthält, die einer Sprache eines Sprechers entsprechen, der Audiostrom codierte Objektdaten enthält, die Audiodaten, deren Schallquelle die Sprache des Sprechers ist, und Positionsinformationen hinsichtlich einer Position der Schallquelle in einem Bild des Videostroms enthalten, die Metadaten Untertiteldaten, die jeder der Sprachen, die im Untertitelstrom enthalten sind, entsprechen, mit Audiodaten, die jeder der Sprachen, die im Audiostrom enthalten sind, entsprechen, und mit den Positionsinformationen, die mit den Audiodaten verknüpft sind, verknüpfen und das Empfangsverfahren ferner Folgendes umfasst:

einen Videodecodierschritt (203) des Erfassens von Videodaten durch einen Decodierprozess des Videostroms, einen Untertiteldecodierschritt (217) des Erfassens von Untertiteldaten, die der Sprache des Sprechers entsprechen, durch einen Decodierprozess des Untertitelstroms, einen Audiodecodierschritt (214) des Erfassens von Kanaldaten, die der Sprache entsprechen, durch einen Decodierprozess des Audiostroms und einen Anzeigeschritt des Anzeigens des Untertitels, der einer Sprache eines Sprechers entspricht, bei der Position eines Sprechers in einem Videobild auf der Grundlage des Audiostroms und der Verknüpfung in den Metadaten.

**Revendications**

1. Appareil de réception (200) comprenant :

une section réception (201) adaptée pour recevoir un flux conteneur dans un format donné incluant un flux vidéo, un flux de sous-titres, un flux audio et des méta-informations, le flux vidéo ayant des données vidéo codées, le flux de sous-titres ayant des données de sous-titres correspondant à un discours d'un locuteur, le flux audio ayant des données objet codées incluant des données audio dont la source sonore est le discours du locuteur et des informations de position relatives à une position de la source sonore dans une image du flux vidéo, et les méta-informations associant des données de sous-titre correspondant à chaque dialogue inclus dans le flux de sous-titres à des données audio correspondant à chaque dialogue inclus dans le flux audio et aux informations de position associées auxdites données audio, l'appareil de réception comprenant en outre :

une section de commande adaptée pour commander un processus de décodage vidéo (203) par lequel des données vidéo sont acquises par l'intermédiaire d'un processus de décodage du flux vidéo, un processus de décodage de sous-titres (217) par lequel des données de sous-titre correspondant au discours du locuteur sont acquises par l'intermédiaire d'un processus de décodage du flux de sous-titres, un processus de décodage audio (214) par lequel des données de canal correspondant au discours sont acquises par l'intermédiaire d'un processus de décodage du flux audio, et un processus d'affichage pour afficher les sous-titres correspondant à un discours du locuteur à la position du locuteur dans une image vidéo en fonction du flux audio et de l'association dans les méta-informations.

2. Appareil de réception (200) selon la revendication 1, dans lequel

chaque donnée de sous-titre correspondant à chacun des discours comprend des informations d'identification, et chaque donnée audio correspondant à chacun des discours comprend des informations d'identification, et
les méta-informations sont des informations en tableau qui associent les informations d'identification des données de sous-titre correspondant à chacun des discours et les informations d'identification des données audio correspondant à chacun des discours.

3. Appareil de réception (200) selon la revendication 2, dans lequel
une trame audio incluant des données audio correspondant à chacun des discours comprend des informations de balises ayant les informations d'identification.

4. Appareil de réception (200) selon l'une quelconque des revendications précédentes, dans lequel
les données de sous-titres sont des données TTML ou des données dans un format dérivé de TTML.

5. Procédé de réception comprenant :

une étape réception (201) consistant à recevoir un flux conteneur dans un format donné incluant un flux vidéo, un flux de sous-titres, un flux audio et des méta-informations,
le flux vidéo ayant des données vidéo codées,
le flux de sous-titres ayant des données de sous-titres correspondant à un discours d'un locuteur,
le flux audio ayant des données objet codées incluant des données audio dont la source sonore est le discours du locuteur et des informations de position relatives à une position de la source sonore dans une image du flux vidéo, et
les méta-informations associant des données de sous-titres correspondant à chaque dialogue inclus dans le flux de sous-titres à des données audio correspondant à chaque dialogue inclus dans le flux audio et aux informations de position associées auxdites données audio,
le procédé de réception comprenant en outre :

une étape de décodage vidéo (203) consistant à acquérir des données vidéo par l'intermédiaire d'un processus de décodage du flux vidéo,

une étape de décodage de sous-titres (217) consistant à acquérir des données de sous-titre correspondant au discours du locuteur par l'intermédiaire d'un processus de décodage du flux de sous-titres,
une étape de décodage audio (214) consistant à acquérir des données de canal correspondant au discours par l'intermédiaire d'un processus de décodage du flux audio, et
une étape d'affichage consistant à afficher les sous-titres correspondant à un discours du locuteur à la position du locuteur dans une image vidéo en fonction du flux audio et de l'association dans les méta-informations.

# FIG.1

# FIG.2

EP 3 720 135 B1

# FIG.3

110

# FIG.4

TTML STRUCTURE

```
<tt xml:lang="" xmlns="http://www.w3.org/ns/ttml">
   <head>
      <metadata/>
      <styling/>
      <layout/>
   </head>
   <body/>
</tt>
```

23

# FIG.5

TTML Metadata  (TTM)

```
<metadata xmlns:ttm="http://www.w3.org/ns/ttml#metadata">
      <ttm:title>Timed Text TTML Example</ttm:title>
      <ttm:copyright>The Authors (c) 2006</ttm:copyright>
</metadata>
```

TTML Styling    (TTS)

```
<styling xmlns:tts="http://www.w3.org/ns/ttml#styling">
      <!-- s1 specifies default color, font, and text alignment -->
      <style xml:id="s1"
            tts:color="white"
            tts:fontFamily="proportionalSansSerif"
            tts:fontSize="22px"
            tts:textAlign="center"
      />
      <!-- alternative using yellow text but otherwise the same as style s1 -->
      <style xml:id="s2" style="s1" tts:color="yellow"/>
      <!-- a style based on s1 but justified to the right -->
      <style xml:id="s1Right" style="s1" tts:textAlign="end" />
      <!-- a style based on s2 but justified to the left -->
      <style xml:id="s2Left" style="s2" tts:textAlign="start" />
</styling>
```

TTML Layout    ( region )

```
<layout xmlns:tts="http://www.w3.org/ns/ttml#styling">
      <region xml:id="subtitleArea"
            style="s1"
            tts:origin="60px 30px"  tts:extent="560px 62px"
            tts:padding="5px 3px"
            tts:backgroundColor="black"
            tts:displayAlign="after"
            subtitle_speech_region_id ="1"
      />
</layout>
```

# F I G . 6

TTML Body

```
<body region="subtitleArea">
    <div>
        <p xml:id="subtitle1" begin="0.76s" end="3.45s">
            subtitle_speech_region_id ="id1"
            It seems a paradox, does it not,
        </p>
        <p xml:id="subtitle2" begin="5.0s" end="10.0s">
            subtitle_speech_region_id ="id2"
            that the image formed on<br/>
             the Retina should be inverted?
        </p>
        <p xml:id="subtitle3" begin="10.0s" end="16.0s" style="s2">
            subtitle_speech_region_id ="id3"
            It is puzzling, why is it<br/>
            we do not see things upside-down?
        </p>
    </div>
</body>
```

# FIG.7

Channel Data (CD)

5.1 ch Data

SCE1 | CPE1.1 | CPE1.2 | LFE1 → Group 1

Dialog SW1 object (DOD)

SW Group 1

Object for dialog language 1

Object for dialog language 2

Object for dialog language 3

(Object metadata) | SCE2
(Object metadata) | SCE3
(Object metadata) | SCE4

→

Group 2

Group 3

Group 4

EP 3 720 135 B1

# FIG.8

Audio Frame

| mpegAudioStreamPacket | mpegAudioStreamPacket | mpegAudioStreamPacket | - - - | mpegAudioStreamPacket | mpegAudioStreamPacket |

Header | Payload

SYNC

Header | Payload

Config

SCE Config
CPE Config
LFE Config
Ext Element Config

Header | Payload

Frame

SCE | CPE | LFE | Ext_element

Header | Payload

TagTable

Header | Payload

SpeechTagInfomation

PacketType | PacketLabel | PacketLength

EP 3 720 135 B1

# FIG.9

```
AudioFrame()
{
      packetType
         switch  packetType {
              ::
              case : SpeechTagInformation
                 Speech_tag_information() ;
                 break;
              case : TagTable
                 Tag_table() ;
                 break;
              ::
         }
}
```

# FIG.10

AUDIO PCM WAVEFORM

f1 — Audio frame

f2

f3

f4

VOICE DETAILS 1

START
offset=xs1

END
offset=xe1

VOICE DETAILS 2

START
offset=xs2

END
offset=xe2

SOUND UNIT 1

SOUND UNIT 2

TIME

EP 3 720 135 B1

# FIG.11

(a)

```
AudioFrame()
{
            packetType = SpeechTagInformation
            speech_id = 1
            speaker_id = 1
            sted_type = 1  // START
            sample_offset = xs
}
```

(b)

```
AudioFrame()
{
            packetType = SpeechTagInformation
            speech_id = 1
            speaker_id = 1
            sted_type = 3  // CONTINUE
}
```

(c)

```
AudioFrame()
{
            packetType = SpeechTagInformation
            speech_id = 1
            speaker_id = 1
            sted_type = 2  // END
            sample_offset = xe
}
```

# FIG.12

# F I G . 1 3

| Tag Table 1 | | |
|---|---|---|
| SW_group_id = 1 | | |
| Group_id = 2 | | |
| Speech_id | Speaker_id | Audio_frame_count |
| 1 | 2 | C1 |
| 2 | 2 | C2 |
| 3 | 1 | C3 |
| 4 | 3 | C4 |

# FIG.14

Speech_tag_information() syntax

| Syntax | No. of Bits | Format |
|---|---|---|
| Speech_tag_information() { | | |
| byte_size | 8 | uimsbf |
| table_size | 8 | uimsbf |
| audio_frame_count | 16 | uimsbf |
| num_of_speeches | 8 | uimsbf |
| for (i = 0;  i < num_of_speeches;  i++) { | | |
| speech_id | 8 | uimsbf |
| group_id | 8 | uimsbf |
| sw_group_id | 8 | uimsbf |
| speaker_id | 8 | uimsbf |
| sted_type | 2 | bslbf |
| sample_offset | 14 | uimsbf |
| } | | |
| } | | |

EP 3 720 135 B1

# FIG.15

Tag_table() syntax

| Syntax | No. of Bits | Format |
|---|---|---|
| Tag_table() { | | |
| byte_size | 8 | uimsbf |
| table_size | 8 | uimsbf |
| group_id | 8 | |
| switch_goup_id | 8 | |
| num_of_speeches | 8 | uimsbf |
| for (i = 0;  i < num_of_speeches ;  i++) { | | |
| speech_id | 8 | uimsbf |
| speaker_id | 8 | uimsbf |
| audio_fame_count | 16 | uimsbf |
| } | | |
| } | | |

EP 3 720 135 B1

FIG.16

semantics

| | |
|---|---|
| **audio_frame_count** (16bits) | INDICATES THE FRAME POSITION OF THE AUDIO FRAME FROM THE BEGINNING OF THE SERVICE AS A FRAME COUNT VALUE. |
| **num_of_groups (8bits)** | INDICATES THE NUMBER OF GROUPS. |
| **stream_id(8bits)** | INDICATES STREAM IDENTIFICATION INFORMATION. |
| **target_subtitle_language** (8bits) | INDICATES THE LANGUAGE OF THE SUBTITLE TO BE LINKED. |
| **num_of_speeches** (8bits) | INDICATES THE NUMBER OF SOUND UNITS. |
| **speech_id** (8bits) | INDICATES SOUND UNIT IDENTIFICATION INFORMATION. |
| **group_id** (8bits) | INDICATES GROUP IDENTIFICATION INFORMATION. |
| **sw_group_id** (8bits) | INDICATES SWITCH GROUP IDENTIFICATION INFORMATION. |
| **num_of_speeches** (16bits) | INDICATES THE NUMBER OF SOUND UNITS. |
| **speaker_id** (8bits) | INDICATES IDENTIFICATION INFORMATION REGARDING THE ORIGINATOR (SPEAKER). |

**sted_type** (2bits)          INDICATES THE START/END TYPE.

     "00"      RESERVE
     "01"      START
     "10"      END
     "11"      CONTINUE

| | |
|---|---|
| **sample_offset** (14bits) | INDICATES THE SAMPLE-BY-SAMPLE OFFSET FROM THE BEGINNING OF THE FRAME TO THE SOUND UNIT START POSITION/END POSITION. |
| **subtitle_speech_region_id** (8bits) | INDICATES IDENTIFICATION INFORMATION OF THE SUBTITLE SPEECH REGION. |

EP 3 720 135 B1

# FIG.17

Link_table_descriptor() syntax

| Syntax | No. of Bits | Format |
|---|---|---|
| Link_table_descriptor() { | | |
| link_table_descriptor_tag | 8 | uimsbf |
| link_table_descriptor_length | 8 | uimsbf |
| num_of_groups | 8 | uimsbf |
| for (j = 0 ; j < num_of_groups ; j++ ) { | | |
| stream_id | 8 | uimsbf |
| group_id | 8 | uimsbf |
| switch_goup_id | 8 | uimsbf |
| target_subtitle_language | 8 | uimsbf |
| num_of_speeches | 8 | uimsbf |
| for (i = 0; i < num_of_speeches ; i++) { | | |
| speech_id | 8 | uimsbf |
| speaker_id | 8 | uimsbf |
| subtitle_speech_region_id | 8 | uimsbf |
| } | | |
| } | | |
| } | | |

EP 3 720 135 B1

# FIG.18

(a)

```
Audio

-   speech_id
        :
```

(b)

```
Subtitle

-   subtitle_speech_region_id
                :
```

(c)

```
container

-   Link_table
        speech_id (id1)
                    -> subtitle_speech_region_id(id1)
            :                               :
```

EP 3 720 135 B1

# F I G . 1 9

MPEG-2 TS
Transport Stream

PMT

Program_loop

video ES loop

Stream_type = 0x24
Elementary PID (PID1)

hevc_descriptor

Audio ES loop

Stream_type = 0x2C (MPEG-H)
Elementary PID (PID2)

Link_table_descriptor

Subtitle ES loop

Stream_type = private stream
Elementary PID (PID3)

Link_table_descriptor

PID1: video PES

PES_payload

PID2: Audio PES

PES_payload

Audio coded stream

Speech_tag_information
( speech_id)
Tag_table

PID3: subtitle PES

PES_payload

Subtitle coded stream

subtitle_speech_region_id

# FIG.20

200

223 DRAM

222 FLASH ROM

221 CPU

225 REMOTE CONTROL RECEPTION SECTION

226 REMOTE CONTROL TRANSMITTER

224

201 RECEPTION SECTION

TS

202 DEMULTIPLEXER

List table descriptor

203 VIDEO DECODING SECTION

204 VIDEO SUPERIMPOSITION SECTION

205 PANEL DRIVE CIRCUIT

206 DISPLAY PANEL

217 SUBTITLE DECODING SECTION

219 SUPERIMPOSITION POSITION CORRECTION SECTION

(x1,y1)

Tag table
Speech tag information

218 DISPLAY COORDINATES MAPPING SECTION

φ、θ

214 AUDIO DECODING SECTION

215 VOICE OUTPUT PROCESSING CIRCUIT

216 SPEAKER SYSTEM

EP 3 720 135 B1

F I G . 2 1

# FIG.22

LT

RT

LB

RB

p

r

φ

θ

VIEWER

Azimuth θ
Elevation φ
Radius r

EP 3 720 135 B1

# FIG.23

FIG.24

# FIG.25

EP 3 720 135 B1

```
┌─────────────────────────────────┐
│            MMT                  │
│      Transport Stream           │
└─────────────────────────────────┘

  ┌──────────────────────────────────┐
  │ Packet Access   MESSAGE PACKET   │
  └──────────────────────────────────┘

    ┌──────────────────────────────┐
    │ MMT Package Table (MPT)      │
    └──────────────────────────────┘

      ┌──────────────────────────────┐
      │ asset_type (= HEVC video)    │
      │ Asset_id  (ID1)              │
      └──────────────────────────────┘

      ┌──────────────────────────────┐
      │ asset_type (= MPEG-H audio)  │
      │ Asset_id  (ID2)              │
      └──────────────────────────────┘
          ┌──────────────────────┐
          │ Link_table_descriptor│
          └──────────────────────┘

      ┌──────────────────────────────────────┐
      │ asset_type (= subtitle coded stream) │
      │ Asset_id  (ID3)                      │
      └──────────────────────────────────────┘
          ┌──────────────────────┐
          │ Link_table_descriptor│
          └──────────────────────┘

  ┌──────────────────────────┐
  │  OTHER MESSAGE PACKET    │
  └──────────────────────────┘

        ┌──────────────────────────┐
        │ ID1: video (HEVC)        │
        └──────────────────────────┘

        ┌──────────────────────────┐
        │ ID2: audio (MPEG-H)      │
        └──────────────────────────┘
            ┌──────────────────────────────┐
            │ Speech_tag_information        │
            │        (speech_id)            │
            │ Tag_table                     │
            └──────────────────────────────┘
            ┌──────────────────────────────┐
            │ MPEG-H 3D Audio               │
            │  Multi-Stream Descriptor      │
            └──────────────────────────────┘

        ┌──────────────────────────┐
        │ ID3: subtitle            │
        └──────────────────────────┘
            ┌──────────────────────────────┐
            │ subtitle_speech_region_id     │
            └──────────────────────────────┘
```

# FIG.26

(a) **Track A** (audio bitstream)

| moof | mdat | | | ... |
|---|---|---|---|---|
| | Audio Frame | Audio Frame | Audio Frame | |

traf
/ tfdt  $\longrightarrow$  baseMediaDecodeTime

/ sgpd / tscl  $\longrightarrow$  Audostreamtype=AudioCodec
Attribute=speechtag

(b) **Track B** (subtitle bitstream)

| moof | mdat | | ... |
|---|---|---|---|
| | TTML document | TTML document | |

traf
/ tfdt  $\longrightarrow$  baseMediaPresentationTime

/ sgpd / tscl  $\longrightarrow$  subtitlestreamtype=TTML
Attribute=speechregionid

EP 3 720 135 B1

# FIG.27

IDENTIFICATION METHOD IN DASH/ISOBMFF

```
<MPD>
    <Period>
        <AdaptationSet mimeType="audio/mp4" group="1">
                <SupplementaryDesctiptor schemeIdUri="urn:brdcst:codecType" value= "Audio Coded Stream"/>
                <SupplementaryDesctiptor schemeIdUri="urn:brdcst:speechtag" value="true"/>
                <Representation id="11" bandwidth="128000">
                            <baseURL>audio/jp/128.mp4</BaseURL>
                </Representation>
        </AdaptationSet>
        <AdaptationSet mimeType="subtitle/mp4" group="2">
                <SupplementaryDesctiptor schemeIdUri="urn:brdcst:codecType" value= "Subtitle Coded Stream"/>
                <SupplementaryDesctiptor schemeIdUri="urn:brdcst:speechregionid" value="true"/>
                <Representation id="12" bandwidth="2000">
                            <baseURL>subtilte/jp/2.mp4</BaseURL>
                </Representation>
        </AdaptationSet>

    </Period>
</MPD>
```

# FIG.28

EP 3 720 135 B1

schemeIdUri IS DEFINED BY semantics AS FOLLOWS USING SupplementaryDescriptor:

INDICATES THE CODEC TYPE WITH schemeIdUri="urn:brdcst:codecType"
        value: WRITTEN AS "mpegh," "AAC," "AC3," "AC4," "TTML"

INDICATES THAT SPEECH TAG INFORMATION IS INCLUDED WITH schemeIdUri="urn:brdcst:speechtag"
        value: "true"          INCLUDES SPEECH TAG
        value: "false"        DOES NOT INCLUDE SPEECH TAG

INDICATES THAT SPEECH REGION INFORMATION IS INCLUDED WITH schemeIdUri="urn:brdcst:speechreigonid"
        value: "true"          INCLUDES SPEECH REGION IDENTIFICATION INFORMATION
        value: "false"        DOES NOT INCLUDE SPEECH REGION IDENTIFICATION INFORMATION

# FIG.29

(a)

Ac4 Simple Transport

| syncWord | frameLen | RawAc4Frame | CRC |

(b)

RawAc4Frame

| TOC | Substream 0 | Substream 1 | Substream 2 | ... |

# FIG.30

(a)

ac4_toc()

ac4_presentation_info()

umd_info()

(b)

ac4_substream_data()

metadata(b_iframe)

umd_payloads_substream()

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012169885 A
- JP 2014520491 T
- US 2017180767 A1
- US 2013002833 A1

### Non-patent literature cited in the description

- speaker-following video subtitles. **YONGTAO HU et al.** ACM Transactions on multimedia computing communications and applications. association for computing machinery, 07 January 2015, vol. 11
- **SIMONE FÜG et al.** metadata updates to MPEG-H 3D audio. *112. MPEG meeting,* 22 June 2015
- **S. MEHTA et al.** personalized and immersive broadcast audio. *IBC 2014 conference,* 11 September 2014